Europäisches Patentamt

European Patent Office

Office européen des brevets

(19)

(11) EP 1 353 469 A2

(12) **EUROPÄISCHE PATENTANMELDUNG**

| | |
|---|---|
| (43) Veröffentlichungstag:<br>**15.10.2003 Patentblatt 2003/42** | (51) Int Cl.$^7$: **H04L 7/02** |

(21) Anmeldenummer: **03003413.6**

(22) Anmeldetag: **14.02.2003**

| | |
|---|---|
| (84) Benannte Vertragsstaaten:<br>**AT BE BG CH CY CZ DE DK EE ES FI FR GB GR HU IE IT LI LU MC NL PT SE SI SK TR**<br>Benannte Erstreckungsstaaten:<br>**AL LT LV MK RO** | (72) Erfinder:<br>• **Daecke, Dirk**<br>  **80469 München (DE)**<br>• **Schenk, Heinrich**<br>  **81476 München (DE)** |
| (30) Priorität: **22.03.2002 DE 10212913** | (74) Vertreter:<br>**Reinhard - Skuhra - Weise & Partner GbR**<br>**Postfach 44 01 51**<br>**80750 München (DE)** |
| (71) Anmelder: **Infineon Technologies AG**<br>**81669 München (DE)** | |

(54) **Berechnungsschaltung zur Berechnung eines Abtastphasenfehlers**

(57) Berechnungsschaltung zur Berechnung eines Abtastphasenfehlersignals für eine entscheidungsrückgekoppelte Taktphasenregelungsschaltung mit einer ersten Verzögerungsgliedkette (31), die mehrere seriell verschaltete Verzögerungsglieder aufweist, zur Verzögerung eines digitalen Schätzwertes $\hat{a}_k$ eines Entscheides; einer zweiten Verzögerungsgliedkette (32), die mehrere seriell verschaltete Verzögerungsglieder aufweist, zur Verzögerung eines entzerrten Signals ($z_k$, $e_k$) ; einem aus matrixförmig angeordneten Multiplizierern bestehenden Multiplizier-Array (33), das den unverzögerten digitalen Schätzwert $\hat{a}_k$ und die verzögerten Schätzwerte aller Verzögerungsglieder der ersten Verzögerungsgliedkette (31) mit dem entzerrten Signal ($z_k$, $e_k$) und den verzögerten Ausgangssignalen aller Verzögerungsglieder der zweiten Verzögerungsgliedkette (32) zur Erzeugung von Produktsignalen multipliziert; einer Gewichtungsschaltung (39), die die durch das Multiplizier-Array erzeugten Produktsignale mit einstellbaren Gewichtungsfaktoren ($b_{ij}$) multipliziert; und mit einem Addierer (41), der die durch die Gewichtungsschaltung (39) gewichteten Produktsignale zu dem Abtastphasenfehlersignal ($v_k$) addiert, das über einen Signalausgang (24) der Berechnungsschaltung (1) abgegeben wird.

FIG 10

**Beschreibung**

Die Erfindung betrifft eine Berechnungsschaltung zur Berechnung eines Abtastphasenfehles für eine entscheidungsrückgekoppelte Taktphasenregelungsschaltung.

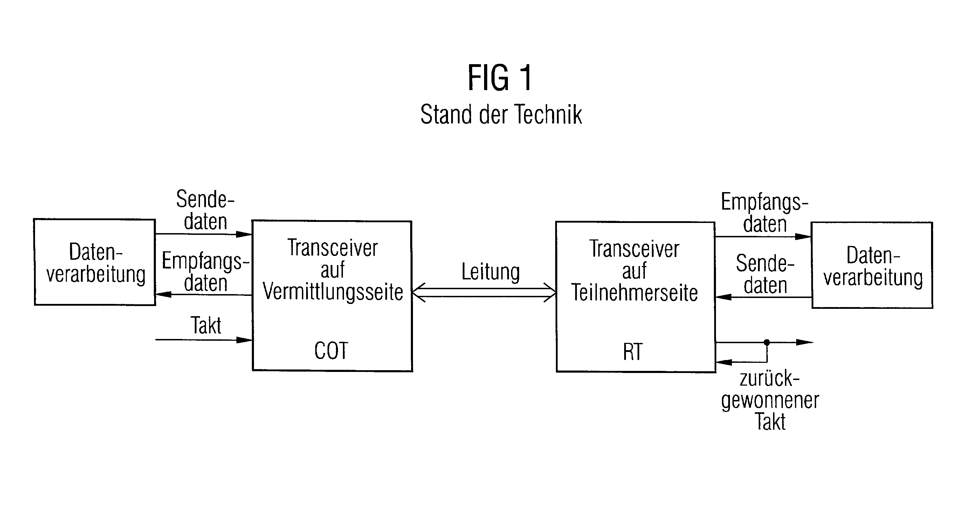

Die Fig. 1 zeigt ein Datenübertragungssystem nach dem Stand der Technik. Ein Transceiver bzw. eine Sende- und Empfangsschaltung empfängt von einer Datenquelle Sendedaten und sendet diese als analoges Sendesignal über eine Datenübertragungsleitung zu einem anderen Transceiver. Bei der Datenübertragungsleitung handelt es sich beispielsweise um eine Zwei-Draht-Telefonleitung aus Kupfer. Der Transceiver auf der Vermittlungsseite COT (central office terminal) stellt dabei den Taktmaster dar, d.h. das gesendete Sendesignal wird synchron mit einem Taktsignal des Transceivers auf der Vermittlungsseite ausgesendet. Der Transceiver auf der Teilnehmerseite RT bildet den sogenannten Takt-Slave, d.h. das empfangsseitig zurückgewonnene Taktsignal wird als dessen Sendetakt verwendet.

Bei einer fehlerfreien Synchronisation des Transceivers RT auf der Teilnehmerseite stimmt die Taktfrequenz des Sendesignals exakt mit der Taktfrequenz des Empfangssignals überein. Daher muss die Taktregelschaltung des vermittlungsseitigen Transceivers nur die genaue Abtastphase in dem darin enthaltenen Empfänger einstellen. Die Abtastphase hängt dabei vor allem von der Signallaufzeit der Übertragungsleitung ab.

Bei dem in Fig. 1 dargestellten Datenübertragungssystem werden die Daten gleichzeitig in beide Richtungen über die Übertragungsleitung übertragen. Es handelt sich daher um ein sogenanntes Vollduplex-Datenübertragungssystem. Das analoge Empfangssignal eines Transceivers setzt sich dabei aus zwei Signalanteilen zusammen, nämlich aus dem von dem gegenüber liegenden Transceiver ausgesendeten Sendesignal und aus dem von der eigenen Sendeeinrichtung eingekoppelten Signalanteil bzw. dem Echosignalanteil. Der Echosignalanteil stellt dabei eine Signalstörung dar und wird in dem Empfänger des Transceivers mittels einer Echokompensationsschaltung kompensiert. Die Echokompensationsschaltung innerhalb des Transceivers berechnet dabei einen möglichst genauen Schätzwert für den Echosignalanteil und subtrahiert diesen von dem empfangenen Signal.

Bei der digitalen Datenübertragung sendet der Sender mit einer Symbolrate 1/T, die auf der Empfangsseite nicht bekannt ist. In der Regel weichen Frequenz und Phase des Sende- und Empfangstaktes voneinander ab. Wenn Sende- und Empfangstakt voneinander abweichen, unterscheidet sich das abgetastete Empfangssignal von dem Sendesignal. Zur Rückgewinnung des ursprünglichen gesendeten Sendesignals ist es notwendig, dass das Empfänger-Taktsignal mit der gleichen Frequenz läuft, wie das Taktsignal des Senders. Darüber hinaus ist es notwendig, dass das Empfänger-Taktsignal die gleiche Phase besitzt, wie das Sendesignal.

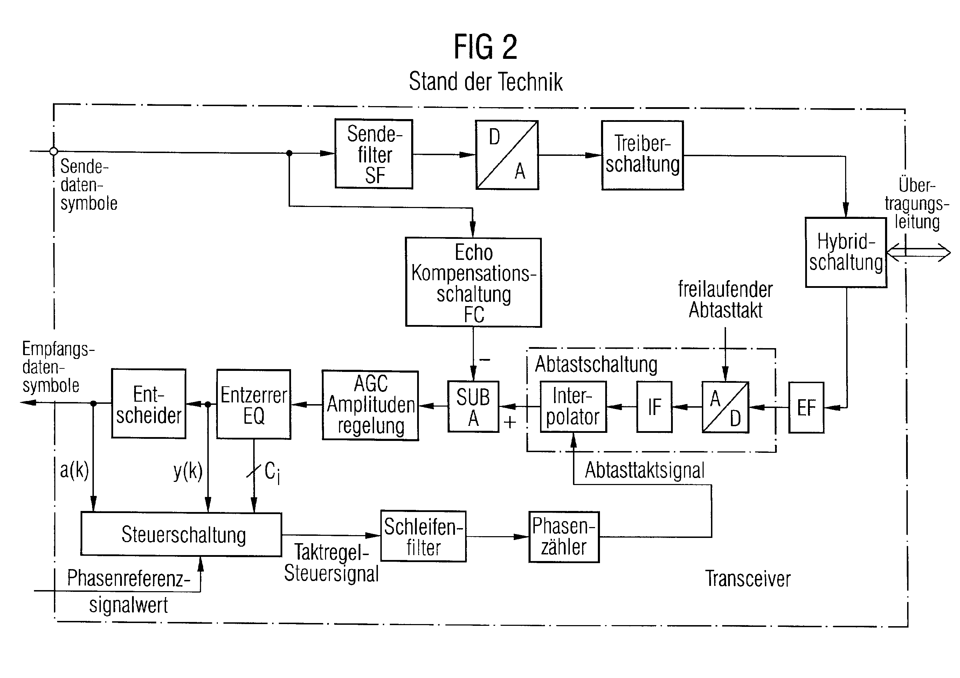

Fig. 2 zeigt einen herkömmlichen Transceiver nach dem Stand der Technik. Der Transceiver besteht aus einem Sendesignalpfad und einem Empfangssignalpfad. Die Sendedaten bzw. Sendedatensymbole werden im Sendesignalpfad zunächst einem Sendefilter zugeführt und anschließend mittels eines Digitalanalogwandlers in ein analoges Sendesignal umgewandelt. Das analoge Sendesignal wird mit einer Treiberschaltung verstärkt an eine Hybrid-Gabelschaltung abgegeben. Die Hybrid-Gabelschaltung ist an die Datenübertragungsleitung angeschlossen.

Am Empfangssignalpfad wird das empfangene analoge Signal zunächst durch ein analoges Empfangsfilter EF gefiltert und anschließend abgetastet. Das Abtasten erfolgt innerhalb einer Abtastschaltung, die entweder aus einem Analog-Digitalwandler besteht oder, wie in Fig. 2 dargestellt, aus einem Analogdigitalwandler, einem Interpolationsfilter IF und einem nachgeschalteten Interpolator. Der Analog-Digitalwandler tastet dabei das analoge Empfangssignal mit einem freilaufenden Arbeitstaktsignal ab. Das abgetastete Signal wird anschließend dem digitalen Interpolationsfilter IF zugeführt und durch den Interpolator interpoliert. Hierzu wird dem Interpolator ein geregeltes Abtasttaktsignal zugeführt.

Der Abtastschaltung ist eine Subtrahierschaltung nachgeschaltet, die von dem abgetasteten digitalen Empfangssignal das von der Echokompensationsschaltung berechnete Schätzsignal durch Erzeugen eines echokompensierten digitalen Empfangssignals subtrahiert. Die Echokompensationsschaltung berechnet anhand der empfangenen Sendedatensymbole das zu erwartende Echosignal und subtrahiert dieses von dem empfangenen Signal. Die Echokompensationsschaltung ist in der Regel adaptiv einstellbar. Die Echokompensationsschaltung wird adaptiv in Abhängigkeit von der Übertragungsfunktion der Übertragungsleitung und der analogen Komponenten, wie beispielsweise der Übertrager, eingestellt.

Das von dem Subtrahierer gebildete Differenzsignal wird einer Amplitudenregelungsschaltung AGC (Automatic Gain Control) zugeführt. Das in der Amplitude geregelte digitale Empfangssignal wird anschließend durch einen Entzerrer entzerrt. Der nachgeschaltete Entscheider bestimmt aus dem entzerrten Empfangssignal einen Schätzwert für das ursprünglich von dem anderen Transceiver ausgesendete Sendedatensymbol. Das gewonnene Sendedatensymbol wird zur weiteren Datenverarbeitung von dem Transceiver an die Datensenke abgegeben. Ein Subtrahierer führt eine Differenzbildung der Signalwerte vor und nach dem Entscheider durch. Dieses Fehler- bzw. Abweichungssignal dient als Einstellsignal für die Echokompensationsschaltung.

Für die Regelung der Abtastphase des Empfangssignals wird mittels einer Steuerschaltung ein Taktregelkriterium bzw. ein Taktregelsteuersignal erzeugt. Das Taktregelsteuersignal gibt die Phasenabweichung zwischen der Signalphase des Abtasttaktsignals und einer gewünschten Soll-Signalphase eines idealen Abtasttaktsignals an. Das Taktregelkriterium bzw. das Taktregelsteuersignal ist ein Maß für den Phasenfehler zwischen dem idealen Abtasttakt, bei dem ein maximaler Signal-Rauschabstand besteht, und dem tatsächlichen Abtasttakt. Das Taktregelsteuersignal wird aus den Abtastwerten vor und nach dem Entscheider (entscheidungsrückgekoppelte Regelung) und ferner aus mindestens einem der Koeffizienten des linearen Entzerrers EQ durch die Steuerschaltung generiert. Das Taktregelkriterium bzw. das Taktregelsteuersignal setzt sich dabei aus zwei Anteilen zusammen, nämlich aus einem Signalanteil, der abhängig ist von den Abtastwerten vor und nach dem Entscheider, und aus einem zweiten Signalanteil, der sowohl abhängig von einem oder mehreren Koeffizienten des linearen Entzerrers als auch von einem geeignet vorgegebenen und an die Steuerschaltung angelegten Phasenreferenzsignalwert ist. Bei optimal eingestellter Abtastphase stimmt der Signalanteil, der von dem Koeffizienten abhängig ist, mit dem vorgegebenen Phasenreferenzsignalwert überein. Die Steuerschaltung generiert daher laufend eine Steuergröße, die ein Maß für die Abweichung der Abtastphase von der Soll-Phase darstellt.

Das generierte Taktregelsteuersignal wird an ein digitales Schleifenfilter abgegeben. Das Ausgangssignal des Schleifenfilters regelt unmittelbar die Abtastphase des Abtasttaktsignals für die Abtastschaltung. Dies wird in der Regel mit einem Phasenzähler realisiert.

In dem digitalen Empfänger des Transceivers wird das zeitkontinuierliche Empfangssignal mit einem Empfänger-Symboltakt abgetastet. Da der Symboltakt des ursprünglichen Sendesignals auf der Empfangsseite unbekannt ist, wird mittels der Taktphasenregelungsschaltung der Symboltakt des Sendesignals generiert. Hierzu wird das Taktsignal aus dem empfangenen Signal abgeleitet. Dies wird auch als Selbst-Synchronisation bezeichnet. Mittels des Taktregelkreises wird neben der Symboltaktfrequenz auch die korrekte Abtastphase eingestellt.

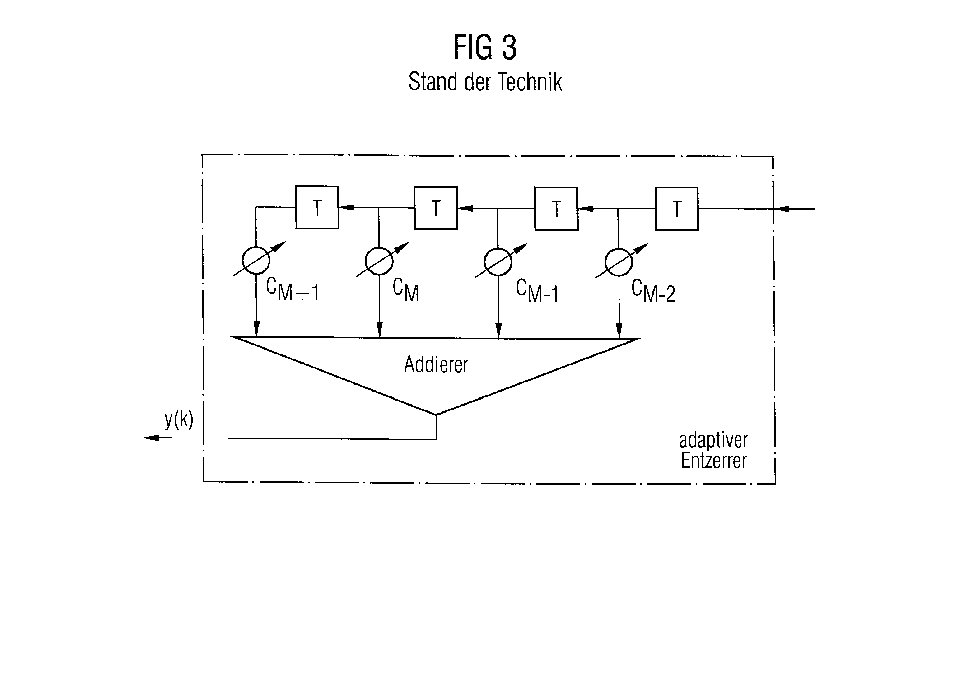

Figur 3 zeigt einen adaptiven Entzerrer nach dem Stand der Technik. Das Ausgangssignal der Amplitudenreglung AGC wird einer Kette von Verzögerungsgliedern zugeführt, deren Ausgangssignal jeweils mit einem Filterkoeffizienten $C_i$ des Entzerrers multipliziert werden. Die mit den Filterkoeffizienten gewichteten Ausgangssignale werden einem Addierer zugeführt und dort aufsummiert. Das Ausgangssignal des adaptiven Entzerrers y(k) wird dem Entscheider innerhalb des Transceivers gemäß Figur 2 zugeführt.

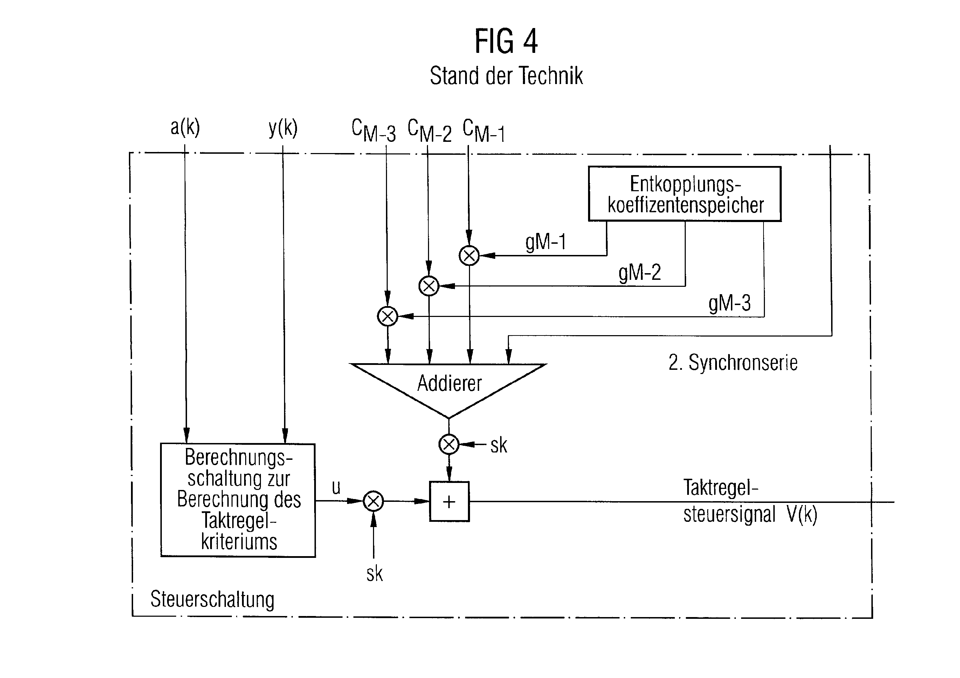

Figur 4 zeigt eine Steuerschaltung innerhalb eines Transceivers nach dem Stand der Technik. Die Steuerschaltung dient zur Erzeugung eines Taktregelsteuersignals, das die Phasenabweichung zwischen der Signalphase des Abtastsignal und einer Soll-Signalphase eines idealen Abtastsignals angibt. Dieses Taktregelsteuersignal wird durch das nachgeschaltete Schleifenfilter gefiltert und dem Phasenzähler zur Generierung des Abtasttaktsignals zugeführt. Die Steuerschaltung enthält eine Berechnungsschaltung zur Berechnung eines Taktregelkriteriums u(k) in Abhängigkeit von dem entzerrten digitalen Empfangssignal y(k) und dem digitalen Schätzwertsignal a(k) am Ausgang des Entscheiders. Das gebildete Taktregelkriterium u(k) wird als digitales Ausgangssignal der Berechnungsschaltung mit einem ersten Skalierungsfaktor $SK_1$ multipliziert und einem Addierer zugeführt. Die Filterkoeffizienten $C_i$ des adaptiven Entzerrers werden abgegriffen und mit gespeicherten Entkopplungskoeffizienten $g_i$ multipliziert. Ein Addierer addiert die Ausgangssignale der Multiplizierer mit einem gespeicherten Phasensignalreferenzwert. Das Ausgangssignal des Addierers ist im eingeschwungenen Zustand null. Das Ausgangssignal des Addierers wird mit einem zweiten Skalierungsfaktor $SK_2$ multipliziert und anschließend durch die Summationsschaltung mit dem skalierten Taktregelkriterium zu dem Taktregelsteuersignal aufsummiert. Die Entkopplungskoeffizienten $g_i$, die vorzugsweise in einem Speicher abgelegt sind, werden in Abhängigkeit von dem Datenübertragungskanal eingestellt und werden zur Entkopplung der adaptiven Entzerrung von der Taktregelung mit den Filterkoeffizienten $C_i$ des adaptiven Entzerrers multipliziert.

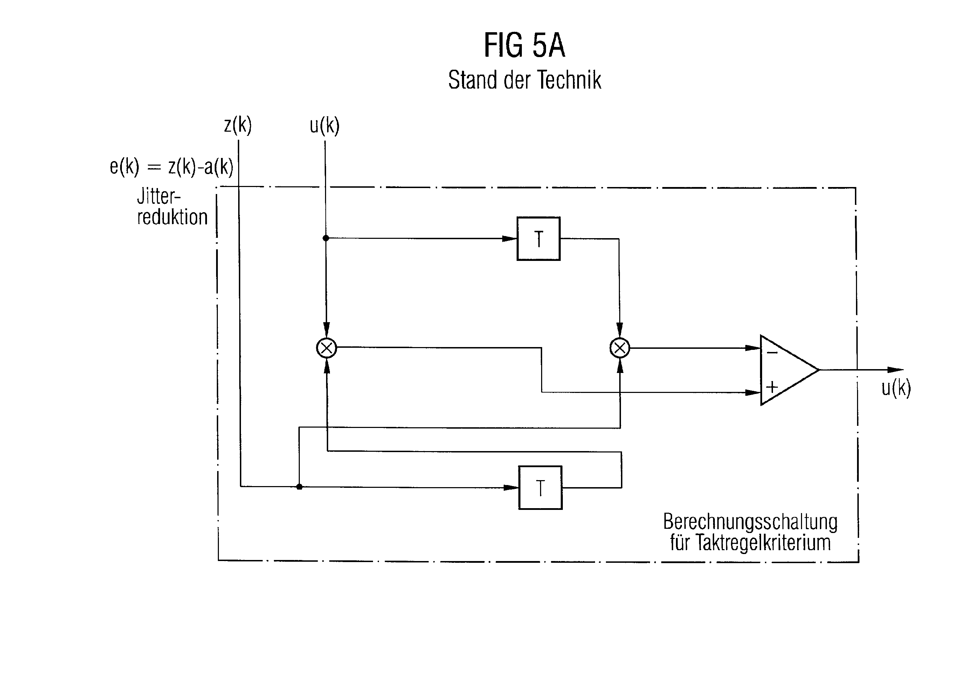

Figur 5a zeigt eine Berechnungsschaltung für das Taktregelkriterium innerhalb der Steuerschaltung nach dem Stand der Technik.

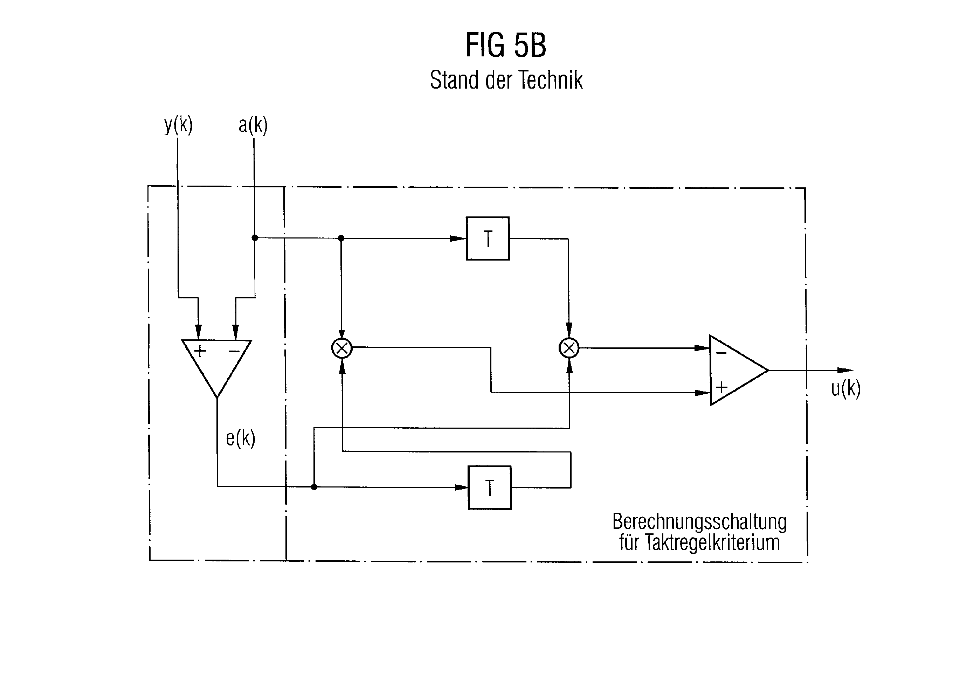

Figur 5b zeigt eine weitere bekannte Berechnungsschaltung für ein Taktregelkriterium innerhalb der Steuerschaltung nach dem Stand der Technik.

Bei den in den Figuren 5a, 5b dargestellten Berechnungsschaltungen nach dem Stand der Technik handelt es sich um sogenannte Mueller und Müller Synchronisierer, wie sie beispielsweise in "Timing recovery in digital synchronous data receivers" IEEE Trans. Commun. Band COM 24, Seiten 516-531, Mai 1976 beschrieben sind. Die Müller-Müller Abtastphasenfehlerdetektoren, wie sie in Figur 5a, 5b dargestellt sind, zeigen einen relativ großen Phasenjitter bei Übertragungsstrecken H, deren Impulsantworten sich über eine größere Anzahl von Taktzyklen T erstrekken. Phasenjitter führt zu einer Verschlechterung der Bitfehlerrate.

Die in den Figuren 2 bis 5 dargestellte Taktphasenregelungsschaltung nach dem Stand der Technik hat den Nachteil, dass sie bei einem Datenübertragungssystem mit Excess-Bandbreite wie beispielsweise HDSL-2, HDSL-4 oder auch SDSL keine stabile Taktregelung ermöglicht, da der Mittelwert des Taktregelungskriteriums um dem Abtastzeitpunkt herum keinen monoton steigenden Null-Durchgang aufweist.

Die Excess-Bandbreite ist größer als die Mindestbandbreite. Die Mindestbandbreite zur Datenübertragung beträgt die halbe Symbolrate d.h., die Mindestbandbreite = ½ x Symboltaktrate = ½ x 1/T.

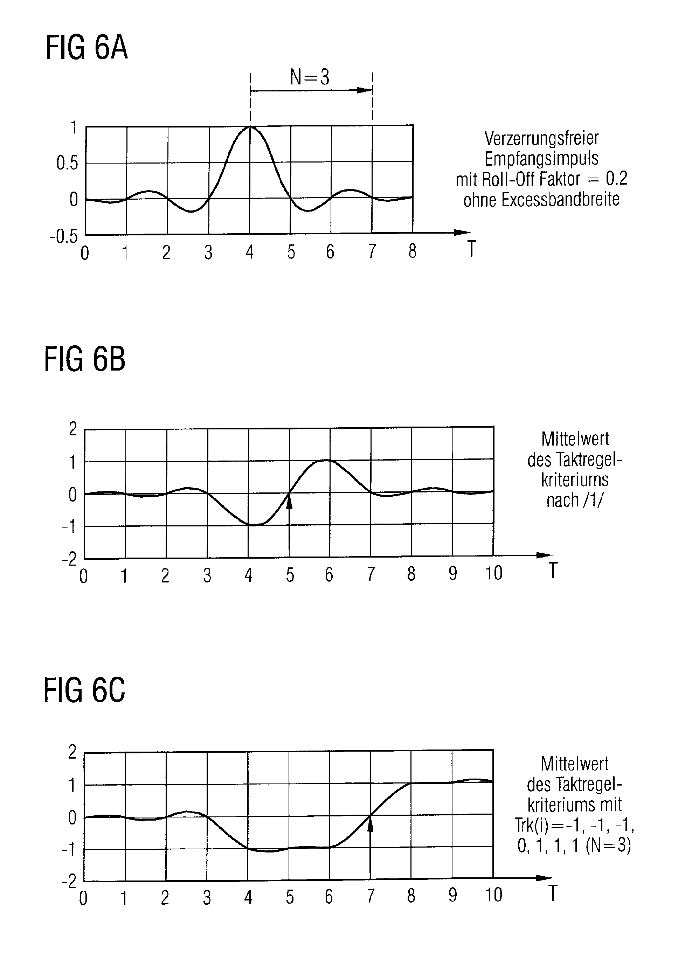

Figur 6a zeigt einen verzerrungsfreien Empfangsimpuls eines Transceivers bei einem Datenübertragungssystem ohne Excess-Bandbreite und mit einem Rolloff-Faktor von 0,2.

Figur 6b zeigt den Mittelwert des durch die Berechnungsschaltung innerhalb der Steuerschaltung gebildeten Taktregelkriteriums u(k) nach dem Stand der Technik. Die in den Figuren 6a, 5b dargestellten herkömmlichen Berechnungsschaltungen zur Berechnung des Taktregelkriteriums u führten zu einer Laufzeitverzögerung von T. Der in Figur 6a dargestellte Empfangsimpuls ist vollkommen verzerrungsfrei d.h. es tritt keine Symbolinterferenz auf. Die Nullstellen des Empfangsimpuls liegen genau auf Vielfachen des Symboltaktes T. Das Maximum des dargestellten verzerrungsfreien Empfangsimpulses liegt in Figur 6a beim Symboltakt 4 x T. Der Abtastzeitpunkt, der bei den in Figuren 5a, 5b dargestellten Berechnungsschaltungen um einen Symboltakt später ist (1 x T) liegt in einem monoton ansteigenden Bereich des berechneten Mittelwertes u. Um den Abtastzeitpunkt 5 x T weist die Kennlinie einen monoton ansteigenden Verlauf auf, so dass eine stabile Taktphasenregelung gewährleistet ist, wenn keine Excess-Bandbreite gegeben ist. Die Kennlinie verläuft um den Abtastzeitpunkt 5 x T herum annähernd linear.

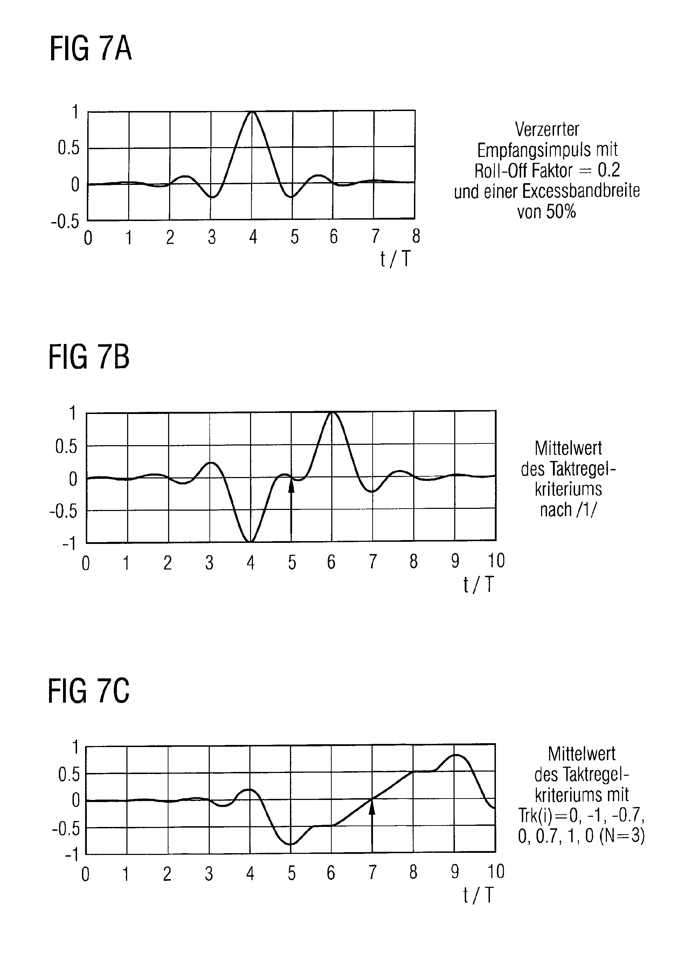

Die Excess-Bandbreite wird bei einem herkömmlichen Transceiver, wie er in Figur 2 dargestellt ist, durch das Sendefilter SF und das Empfangsfilters EF bestimmt. Figur 7a zeigt einen verzerrten Empfangsimpuls eines Transceivers mit einem Rolloff-Faktor = 0,2 und einer Excess-Bandbreite von 50%. Durch die Excess-Bandbreite kommt es bei dem Empfangsimpuls zu Verzerrungen des Empfangssignals. Die Nulldurchgänge des Empfangsimpulses liegen nicht mehr im Taktsymbolraster bzw. beim Vielfachen des Symboltaktes T. Figur 7b zeigt den Verlauf des Mittelwertes des durch die herkömmliche Berechnungsschaltung berechneten Taktregelkriteriums. Im Bereich des Abtastzeitpunktes (5 x T) weist der gebildete Mittelwert keinen monoton ansteigenden bzw. abfallenden Verlauf, sondern einen S-förmigen Verlauf mit Wendepunkt auf. In dem Bereich des Abtastzeitpunkts liegt kein monoton steigender bzw. fallender Nulldurchgang vor. Die Regelkennlinie ist bei der herkömmlichen Taktphasenregelungsschaltung nach dem Stand der Technik bei einem Datenübertragungssystem mit Excess-Bandbreite im Bereich des Abtastzeitpunktes nicht annähernd linear und somit auch nicht stabil.

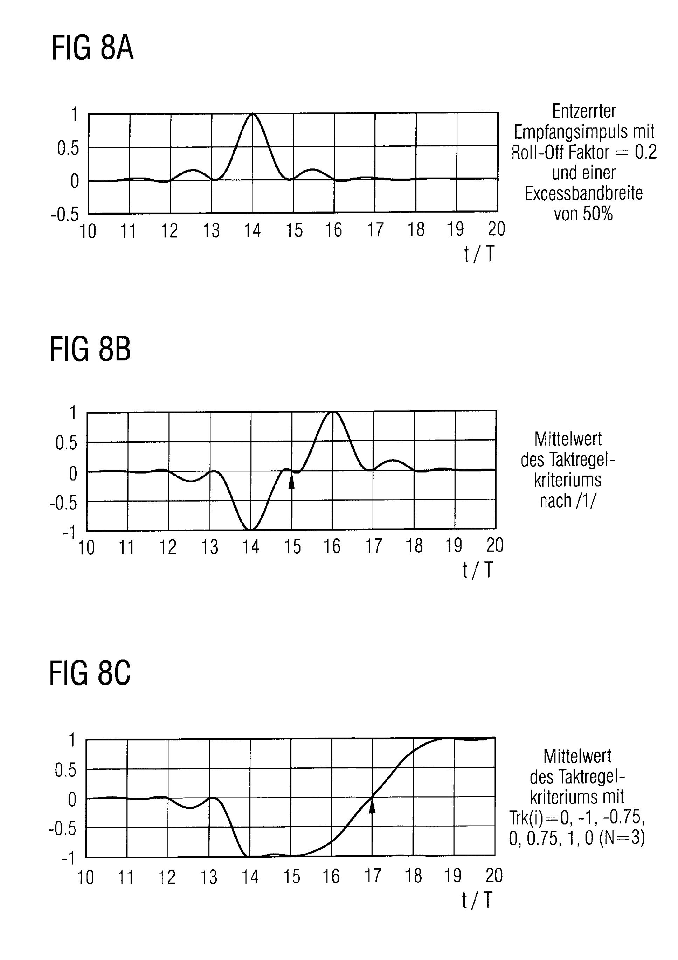

Auch der in dem Transceiver vorgesehene Entzerrer kann bei der herkömmlichen Taktphasenregelungsschaltung nicht verhindern, dass eine instabile Regelung auftritt, wie man aus Figur 8 erkennen kann. Figur 8 zeigt den Fall eines ursprünglich verzerrt empfangenen Empfangsimpulses, der durch den in dem Transceiver vorgesehenen Entzerrer entzerrt wird, wobei das Datenübertragungssystem eine Excess-Bandbreite von 50% aufweist. Wie man aus Figur 8b erkennen kann, ist im Bereich des Abtastzeitpunktes der Verlauf des Mittelwertes für das durch die herkömmliche Berechnungsschaltung berechnete Taktregelkriterium ebenfalls S-förmig. Im Bereich des Abtastzeitpunktes besteht selbst bei Entzerrung durch einen Entzerrer kein monoton verlaufender Nulldurchgang, so dass eine stabile Taktphasenregelung nicht möglich ist.

Es ist daher die Aufgabe der vorliegenden Erfindung, eine Berechnungsschaltung zur Berechnung eines Abtastphasenfehlersignals für eine entscheidungsrückgekoppelte Taktphasenregelungsschaltung zu schaffen, die ein stabiles Regelverhalten auch bei einem Datenübertragungssystem mit Excess-Bandbreite aufweist.

Bei langen Impulsantworten erzeugt ein herkömmlicher Abtastphasenfehlerdetektor ein Selbst-Störsignal (systematischen Phasenjitter). Jitter führt jedoch zu einer Verschlechterung der Bitfehlerrate des Empfangssignals.

Die erfindungsgemäße Beschaltung ermöglicht bei langen Impulsantworten eine Synchronisation mit weitaus geringeren Phasenjitter als herkömmliche Schaltungen. Zudem weisen herkömmliche Schaltungen bei vielen Impulsformen (beispielsweise Excess-Bandbreitenimpulse, asymmetrische Impulse), kein stabiles Regelverhalten auf.

Ein weiterer Vorteil der erfindungsgemäßen Berechnungsschaltung besteht darin, dass aufgrund der Vielzahl der einstellbaren Gewichtungsfaktoren die Schaltung in verschiedensten Anwendungen universell einsetzbar und an beliebige Datenübertragungsstrecken H anpassbar ist.

Diese Aufgabe wird erfindungsgemäß durch eine Berechnungsschaltung zur Berechnung eines Abtastphasenfehlersignals für eine Taktphasenregelungsschaltung mit den in dem Patentanspruch 1 oder in dem Patentanspruch 17 angegebenen Merkmalen gelöst.

Die Erfindung schafft eine Berechnungsschaltung zur Berechnung eines Abtastphasenfehlersignals für eine entscheidungsrückgekoppelte Taktphasenregelungsschaltung mit:

(a) einer ersten Verzögerungsgliedkette, die mehrere seriell verschaltete Verzögerungsglieder aufweist, zur Verzögerung eines digitalen Schätzwertes $\hat{a}_k$ eines Entscheiders;

(b) einer zweiten Verzögerungsgliedkette, die mehrere seriell verschaltete Verzögerungsglieder aufweist, zur Verzögerung eines entzerrten Signals ($z_k$, $e_k$);

(c) einem aus matrixförmig angeordneten Multiplizierern bestehenden Multiplizier-Array, das den unverzögerten digitalen Schätzwert $\hat{a}_k$ und die verzögerten Schätzwerte aller Verzögerungsglieder der ersten Verzögerungsgliedkette mit dem entzerrten Signal ($z_k$, $e_k$) und den verzögerten Ausgangssignalen aller Verzögerungsglieder der zweiten Verzögerungsgliedkette zur Erzeugung von Produktsignalen multipliziert;

(d) einer Gewichtungsschaltung, die die durch das Multiplizier-Array erzeugten Produktsignale mit einstellbaren Gewichtungsfaktoren ($b_{ij}$) multipliziert; und mit

(e) einem Addierer, der die durch die Gewichtungsschaltung gewichteten Produktsignale zu dem Abtastphasenfehlersignal ($v_k$) addiert, das über einen Signalausgang der Berechnungsschaltung abgegeben wird.

Eine bevorzugte Ausführungsform der Taktphasenregelungsschaltung ist dadurch gekennzeichnet, dass eine Subtraktionsschaltung vorgesehen ist, die ein Differenzsignal ($e_k$) zwischen dem durch einen Entzerrer entzerrten digitalen Empfangssignal ($z_k$) und dem durch den Entscheider gebildeten Schätzwert $\hat{a}_k$ erzeugt.

Eine mögliche Ausführungsform der Taktphasenregelungsschaltung ist dadurch gekennzeichnet, dass das Differenzsignal ($e_k$) an die zweite Verzögerungsgliedkette angelegt wird.

Eine bevorzugte Ausführungsform der Taktphasenregelungsschaltung ist dadurch gekennzeichnet, dass die Anzahl (L) der seriell verschalteten Verzögerungsglieder in beiden Verzögerungsgliedketten identisch ist.

Eine bevorzugte Ausführungsform der Taktphasenregelungsschaltung ist dadurch gekennzeichnet, dass die Verzögerungsglieder mit der Symboltaktrate des digitalen Empfangssignals getaktet werden.

Eine bevorzugte Ausführungsform der Taktphasenregelungsschaltung ist dadurch gekennzeichnet, dass der Signalausgang der Berechnungsschaltung mit einem Schleifenfilter zum Filtern des Abtastphasenfehlersignals verbunden ist.

Eine bevorzugte Ausführungsform der Taktphasenregelungsschaltung ist dadurch gekennzeichnet, dass dem Schleifenfilter ein Phasenzähler nachgeschaltet ist.

Eine bevorzugte Ausführungsform der Taktphasenregelungsschaltung ist dadurch gekennzeichnet, dass der Entscheider ein über eine Übertragungsstrecke (H) übertragenes digitalen Empfangssignals empfängt.

Je länger die Impulsantwort h (t) dauert, umso mehr Verzögerungsglieder sind seriell in den Verzögerungsgliedketten verschaltet.

Die Anzahl (L) der seriell verschalteten Verzögerungsglieder ist vorzugsweise geringer als die Anzahl der Takte (T) der Impulsantwort h (t).

Eine bevorzugte Ausführungsform der Taktphasenregelungsschaltung ist dadurch gekennzeichnet, dass die Übertragungsstrecke (H) aufweist:

ein digitales Sendefilter eines Senders,
einen Digital/Analog-Wandler zur Umwandlung des digitalen Sendesignals in ein analoges Sendesignal,
einen Übertragungskanal zur Übertragung des Sendesignals an einen Empfänger,
einen Analog/Digital-Wandler zur Umwandlung des über dem Übertragungskanal empfangenen Empfangssignals in ein digitales Empfangssignal,
ein digitales Empfangsfilter zum Filtern des digitalen Empfangssignals,
einen Entzerrer zum Entzerren des Empfangssignals.

Eine bevorzugte Ausführungsform der Taktphasenregelungsschaltung ist dadurch gekennzeichnet, dass zwischen dem Empfangsfilter und dem Entzerrer ein Interpolator vorgesehen ist.

Eine bevorzugte Ausführungsform der Taktphasenregelungsschaltung ist dadurch gekennzeichnet, dass der Analog/Digital-Wandler mit einem freilaufenden Arbeitstakt arbeitet, wobei der Interpolator durch das von dem Phasenzähler abgegebene Abtasttaktsignal gesteuert wird.

Eine bevorzugte Ausführungsform der Taktphasenregelungsschaltung ist dadurch gekennzeichnet, dass das Multiplizier-Array $L^2$ Multiplizierer zur Erzeugung von $L^2$ Produktsignalen enthält.

Eine bevorzugte Ausführungsform der Taktphasenregelungsschaltung ist dadurch gekennzeichnet, dass die Gewichtungsschaltung $L^2$ Multiplizierer zur Multiplikation der Produktsignale mit den einstellbaren Gewichtungsfaktoren aufweist.

Eine bevorzugte Ausführungsform der Taktphasenregelungsschaltung ist dadurch gekennzeichnet, dass eine programmierbare Speichereinheit zum Speichern der Gewichtungsfaktoren vorgesehen.

Eine bevorzugte Ausführungsform der Taktphasenregelungsschaltung ist dadurch gekennzeichnet, dass das Abtastphasenfehlersignal durch den Abtastphasendetektor gemäß folgender Gleichung berechnet wird

$$V(\tau) = \begin{bmatrix} a_0, a_1, \dots \end{bmatrix} * H_{\langle L-1, L-1 \rangle} * B_{\langle L-1, L-1 \rangle} * \begin{bmatrix} \hat{a}_0 \\ \hat{a}_1 \\ \vdots \\ \hat{a}_{L-1} \end{bmatrix}$$

wobei:

$a_i$ die Sendesymbole;
H Übertragungsmatrix der Übertragungsstrecke;
B die Gewichtungskoeffizientenmatrix der Gewichtungsschaltung und
$\hat{a}_i$ die Symbolschätzwerte des Entscheiders sind.

Eine weitere bevorzugte Ausführungsform der Taktphasenregelungsschaltung besteht aus einer Berechnungsschaltung zur Berechnung eines Abtastphasenfehlersignals für eine entscheidungsrückgekoppelte Taktphasenregelungsschaltung mit:

(a) einer Subtraktionsschaltung, die ein Differenzsignal zwischen einem durch einen Entzerrer entzerrten digitalen Empfangssignal ($z_k$) und einem durch einen Entscheider gebildeten digitalen Schätzwert $\hat{a}_{(k)}$ erzeugt;

(b) einen nicht rekursiven digitalen Filter zum Filtern des Differenzsignals ($e_k$),
wobei das nicht rekursive digitale Filter eine Verzögerungsgliedkette mit einer Anzahl von seriell verschalteten Verzögerungsgliedern aufweist, deren verzögerte Ausgangssignale jeweils mit einem einstellbaren Gewichtungskoeffizienten multipliziert und durch einen Addierer zu einem digitalen Filterausgangssignal addiert werden, wobei der Gewichtungskoeffizient für das Ausgangssignal des in der Mitte der Verzögerungsgliedkette gelegenen Verzögerungsgliedes Null ist;

(c) einer Verzögerungsschaltung zur Verzögerung des digitalen Schätzwertsignals $\hat{a}_{(k)}$ mit einer Verzögerungszeit (N * T) zwischen einem Eingang des nicht rekursiven digitalen Filters und dem mittig gelegenen Verzögerungsglied innerhalb der Verzögerungsgliedkette und mit

(d) einem Multiplizierer, der das digitale Filterausgangssignal des nicht rekursiven digitalen Filters mit dem Ausgangssignal der Verzögerungsschaltung zu dem Abtastphasenfehlersignal $v_k$ multipliziert.

Eine bevorzugte Ausführungsform der Taktphasenregelungsschaltung ist dadurch gekennzeichnet, dass die Gewichtungskoeffizienten für die übrigen Verzögerungsglieder der Verzögerungsgliedkette zu dem Gewichtungskoeffizienten für das mittig gelegene Verzögerungsglied punktsymmetrische Werte aufweisen, wenn die Impulse des Empfangssignals symmetrisch sind.
Eine bevorzugte Ausführungsform der Taktphasenregelungsschaltung ist dadurch gekennzeichnet, dass der Subtraktionsschaltung eine Vorzeichenschaltung nachgeschaltet ist, die das Vorzeichen des Differenzsignals erkennt und an das nicht rekursive digitale Filter abgibt.
Eine bevorzugte Ausführungsform der Taktphasenregelungsschaltung ist dadurch gekennzeichnet, dass der Verzögerungsschaltung eine zweite Vorzeichenschaltung vorgeschaltet ist, die das Vorzeichen des digitalen Schätzwertsignals erkennt und an die Verzögerungsschaltung abgibt.
Eine bevorzugte Ausführungsform der Taktphasenregelungsschaltung ist dadurch gekennzeichnet, dass der Entzerrer ein adaptiver Entzerrer ist.
Eine bevorzugte Ausführungsform der Taktphasenregelungsschaltung ist dadurch gekennzeichnet, dass die Filterkoeffizienten ($C_i$) des adaptiven Entzerrers mit gespeicherten Entkopplungskoeffizienten ($g_i$) multipliziert und mittels eines Addierers mit einem Phasenreferenzsignalwert zu einem Entkopplungssignal addiert werden.
Eine bevorzugte Ausführungsform der Taktphasenregelungsschaltung besteht aus:

(a) einem Analog/Digital-Wandler, der ein analoges Empfangssignal mit einem Abtasttaktsignal zur Erzeugung eines digitalen Empfangssignals abtastet;

(b) einem Entzerrer zum Entzerren des digitalen Empfangssignals;

(c) einem dem Entzerrer nachgeschalteten Entscheider, der aus dem entzerrten digitalen Empfangssignal ein digitales Schätzwertsignal $\hat{a}_k$ für das Empfangssignal erzeugt;

(d) einem Abtastphasenfehlerdetektor zur Erzeugung eines Abtastphasenfehlersignals $v_k$ zur Taktphasenregelung, das die Phasenabweichung zwischen der Signalphase des Abtasttaktsignals und einer Soll-Signalphase eines idealen Abtasttaktsignals angibt; und mit

(e) einem Schleifenfilter, das das Abtastphasenfehlersignal $v_k$ filtert und als Abtastsignal an den Analog/Digital-Wandler abgibt;

(f) wobei der Abtastphasenfehlerdetektor aufweist:

eine Subtraktionsschaltung (2), die ein Differenzsignal $e_k$ zwischen dem entzerrten digitalen Empfangssignal $z_k$ und dem digitalen Schätzwertsignal $\hat{a}_k$ erzeugt,

eine erste Verzögerungsgliedkette, die mehrere seriell verschaltete Verzögerungsglieder aufweist, zur Verzögerung des digitalen Schätzwertes $\hat{a}_k$ des Entscheiders,

eine zweite Verzögerungsgliedkette, die mehrere seriell verschaltete Verzögerungsglieder aufweist, zur Verzögerung des entzerrten Differenzsignals $e_k$,

einen aus matrixförmig angeordneten Multiplizierer bestehenden Multiplizier-Array, das den unverzögerten digitalen Schätzwert $\hat{a}_k$ und die verzögerten Schätzwerte aller Verzögerungsglieder der ersten Verzögerungsgliedkette mit dem entzerrten Differenzsignal $e_k$ und den verzögerten Differenzsignalen aller Verzögerungsglieder der zweiten Verzögerungsgliedkette zur Erzeugung von Produktsignalen multipliziert, eine Gewichtungsschaltung, die die durch das Multiplizier-Array erzeugten Produktsignale mit einstellbaren Gewichtungsfaktoren multipliziert,

und einen Addierer, der die durch die Gewichtungsschaltung gewichteten Produktsignale zur Erzeugung des Abtastphasenfehlersignals $v_k$ addiert, das über einen Signalausgang des Abtastphasenfehlerdetektors an das Schleifenfilter abgegeben wird.

Eine bevorzugte Ausführungsform der Taktphasenregelungsschaltung ist dadurch gekennzeichnet, dass sie in einem Transceiver vorgesehen ist.

Eine bevorzugte Ausführungsform der Taktphasenregelungsschaltung ist dadurch gekennzeichnet, dass eine Echosignalkompensationsschaltung zur Kompensation eines Echosignals, welches durch einen von dem Transceiver gesendetes Sendesignal hervorgerufen wird, vorgesehen ist.

Eine bevorzugte Ausführungsform der Taktphasenregelungsschaltung ist dadurch gekennzeichnet, dass eine Amplitudenbegrenzungsschaltung vorgesehen ist, die die Amplitude des gefilterten Steuersignals auf einen Begrenzungswert begrenzt, wobei der Begrenzungswert von einem Einstellsignal für die Echosignalkompensationsschaltung abhängt.

Eine bevorzugte Ausführungsform der Taktphasenregelungsschaltung ist dadurch gekennzeichnet, dass ein digitales Ausgangssignal der Echokompensationsschaltung von gefilterten digitalen Empfangssignalen mittels eines Subtrahierers zur Erzeugung eines echokompensierten digitalen Empfangssignals subtrahiert wird.

Eine bevorzugte Ausführungsform der Taktphasenregelungsschaltung ist dadurch gekennzeichnet, dass sie in einer Datenempfangseinrichtung vorgesehen ist.

Eine bevorzugte Ausführungsform der Taktphasenregelungsschaltung ist dadurch gekennzeichnet, dass die Datenempfangseinrichtung ein Empfänger zum Empfang eines analogen Empfangssignals ist.

Eine bevorzugte Ausführungsform der Taktphasenregelungsschaltung ist dadurch gekennzeichnet, dass die Datenempfangseinrichtung eine Leseeinrichtung zum Auslesen eines analogen Signals ist.

Die erfindungsgemäße Berechnungsschaltung weist den Vorteil auf, dass sie bei allen Datenübertragungssystemen mit Excess-Bandbreite, wie beispielsweise HDSL-2, HDSL-4, SDSL mit unsymmetrischer PSD ein stabiles Regelungsverhalten aufweist.

Die erfindungsgemäße Berechnungsschaltung ermöglicht auch bei Datenübertragungssystemen mit Excess-Bandbreite den Einsatz von T-Entzerrern, d.h. Entzerrer, die mit dem Symboltakt T arbeiten. Bei herkömmlichen Taktphasenregelungsschaltungen mussten hierzu bisher T½-Entzerrer eingesetzt werden, die mit doppelter Symboltaktrate eine Entzerrung durchführen.

Transceiver, die T-Entzerrer einsetzen, sind in dem Vergleich zu Transceivern, die T½-Entzerrer einsetzen, schaltungstechnisch weniger aufwendig. Dies hat wiederum den Vorteil, dass die Verlustleistung eines Transceivers mit der erfindungsgemäßen Taktphasenregelungsschaltung im Vergleich zu Transceivers mit herkömmlichen Taktphasenregelungsschaltungen geringer ist und auch die benötigte Chipfläche eines Transceivers mit der erfindungsgemäßen Taktphasenregelungsschaltung im Vergleich zu den bisherigen Transceivern geringer ist.

Die erfindungsgemäße entscheidungsrückgekoppelte Taktphasenregelungsschaltung weist ein günstiges Jitterverhalten, insbesondere einen geringen Phasenjitter auf.

Die erfindungsgemäße Taktphasenregelungsschaltung ist auch bei Einsatz eines adaptiven Entzerrers einsetzbar.

Im weiteren werden bevorzugte Ausführungsformen der erfindungsgemäßen Berechnungsschaltung zur Berechnung eines Taktregelkriteriums für eine Taktphasenregelungsschaltung eines Transceivers unter Bezugnahme auf die beigefügten Figuren zur Erläuterung erfindungswesentlicher Merkmale beschrieben.

Es zeigen:

Figur 1        ein Datenübertragungssystem nach dem Stand der Technik;

Figur 2        einen Transceiver nach dem Stand der Technik;

Figur 3        einen in dem Transceiver enthaltenen adaptiven Entzerrer nach dem Stand der Technik;

Figur 4        eine in dem herkömmlichen Transceiver enthaltene Steuerschaltung nach dem Stand der Technik;

Figur 5a, 5b     Berechnungsschaltungen zur Berechnung des Taktregelkriteriums nach dem Stand der Technik;

Figur 6        Impulsantworten für ein verzerrungsfreies Datenübertragungssystem mit einem Rolloff-Faktor von 20%;

Figur 7        Impulsantworten für ein nicht entzerrtes Datenübertragungssystem mit einem Rolloff-Faktor von 20% und einer Excess-Bandbreite von 50%;

Figur 8        Impulsantworten für ein entzerrtes Datenübertragungssystem mit einem Rolloff-Faktor von 20% und einer Excess-Bandbreite von 50%.

Figur 9 zeigt einen ersten Empfänger, der mit einem freilaufenden Arbeitstakt arbeitet und den erfindungsgemäßen Abtastphasenfehlerdetektor enthält;

Figur 10 zeigt den schaltungstechnischen Aufbau einer Berechnungsschaltung gemäß der Erfindung;

Figur 11 zeigt einen weiteren Empfänger mit der erfindungsgemäßen Berechnungsschaltung bei dem der Analog/Digital-Wandler durch das Abtastphasensteuersignal getaktet wird;

Figur 12 zeigt eine bevorzugte Ausführungsform der erfindungsgemäßen Berechnungsschaltung mit einem LxL Multiplizierer-Array.

Figur 13a zeigt eine ideale Kennlinie eines Abtastphasenfehlerdetektors;

Figur 13b die Varianz bzw. den Jitter des Ausgangssignals eines Abtastphasenfehlerdetektors;

Figuren 14a, 14b eine bevorzugte Ausgestaltung des in Figur 12 dargestellten Abtastphasendetektors;

Figur 15a eine erste Implementierung der in Figur 14b dargestellten Ausführungsform des erfindungsgemäßen Abtastphasenfehlerdetektors;

Figur 15b eine weitere Implementierung der in Figur 14b dargestellten Ausführungsform des erfindungsgemäßen Abtastphasenfehlerdetektors;

Figur 16a, 16b, 16c verschiedene Implementierungsvarianten des erfindungsgemäßen Abtastphasenfehlerdetektors;

Figur 17 einen optimierten Abtastphasenfehlerdetektor gemäß der Erfindung für einen Raised Cosine Impulse mit $\alpha$=0,5;

Figuren 18a, 18b, 18c weitere Implementierungsvarianten des erfindungsgemäßen Abtastphasenfehlerdetektors für einen Raised Cosine Impulse $\alpha$=0,5.

Figuren 19a-19d ein Beispiel zur systematischen Ermittlung einer Ausführungsform des erfindungsgemäßen Abtastphasenfehlerdetektors.

Figur 20 ein weiteres Beispiel einer Ausführungsform des erfindungsgemäßen Abtastphasenfehlerdetektors.

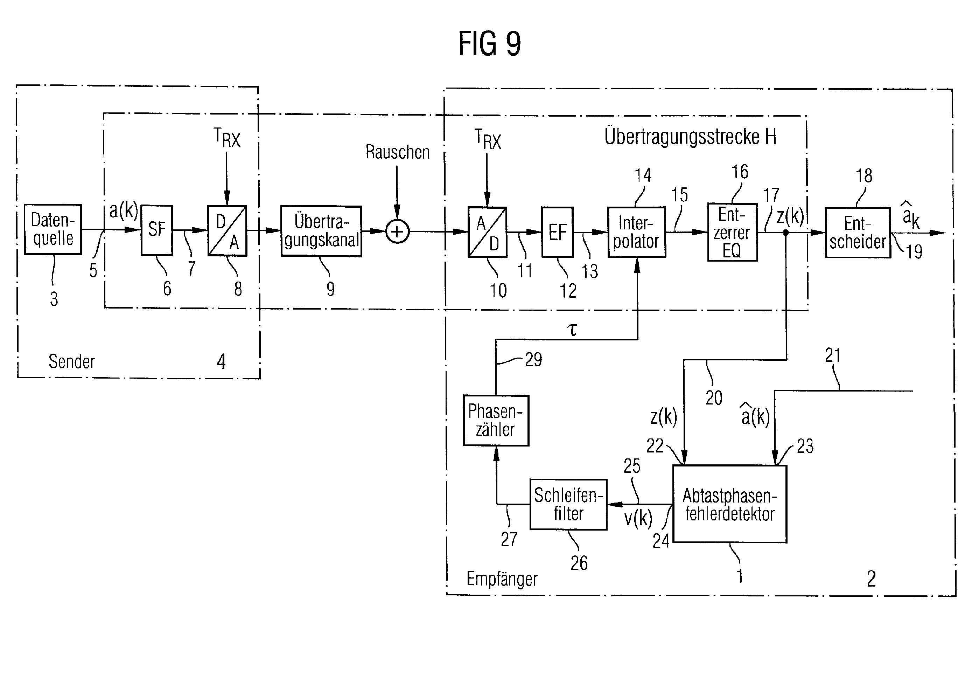

Die Figur 9 zeigt einen erfindungsgemäßen Abtastphasenfehlerdetektor bzw. eine Berechnungsschaltung 1 zur Berechnung eines Abtastphasenfehlersignals bei einer möglichen Anwendung innerhalb eines Empfängers 2.

Eine Datenquelle 3 innerhalb eines Senders 4 gibt Sendedatensymbole a über eine Leitung 5 an ein digitales Sendefilter 6 zur Sendeimpulsformung ab. Dem Sendefilter 6 ist über eine Leitung 7 ein Digital/Analog-Wandler 8 innerhalb des Senders 4 nachgeschaltet. Der Digital/Analog-Wandler 8 wird mit einem Symboltakt $T_{TX}$ betrieben. Das analog gewandelte Sendesignal wird von dem Sender 4 über einen Übertragungskanal 9 an einen Empfänger 2 übertragen. Bei dem Datenübertragungskanal 9 handelt es sich um einen zeitinvarianten Datenübertragungskanal, um einen leitungsgebundenen Datenübertragungskanal. Dem Empfangssignal ist ein Rauschen additiv überlagert.

Der Empfänger 2 enthält einen Analog/Digital-Wandler 10, der mit einem Takt $T_{RX}$ arbeitet. Dem Analog/Digital-Wandler 10 ist über eine Leitung 11 ein Empfangsfilter 12 nachgeschaltet, welches das gefilterte Signal über eine Leitung 13 an einen nachgeschalteten Interpolator 14 abgibt. Der Interpolator 14 ist ausgangsseitig über eine Leitung 15 an einen Entzerrer bzw. Equalizer 16 angeschlossen. Das entzerrte Empfangssignal $z_k$ wird von dem Entzerrer 16 über eine Leitung 17 an einen Entscheider 18 abgegeben, der digitale Schätzwerte $\hat{a}_k$ über eine Leitung zur weiteren Datenverarbeitung innerhalb des Empfängers 2 abgibt.

Der erfindungsgemäße Abtastphasenfehlerdetektor 1 innerhalb des Empfängers 2 greift über eine Leitung 20 das von dem Entzerrer 16 entzerrte digitale Empfangssignal $z_k$ und über eine Leitung 21 die von dem Entscheider 18 abgegebenen digitalen Schätzwerte $\hat{a}_k$ ab. Das entzerrte digitale Signal $z_k$ gelangt über die Leitung 20 zu einem Eingang 22 des Abtastphasenfehlerdetektors 1. Darüber hinaus weist der Abtastphasenfehlerdetektor 1 einen weiteren Eingang 23 zum Empfang der digitalen Schätzwerte $\hat{a}_k$ auf. Der Abtastphasenfehlerdetektor 1 berechnet ein Abtastphasenfehlersignal $v_k$ für die entscheidungsrückgekoppelte Taktphasenregelung des Empfängers 2. Das Abtastphasenfehlersignal $v_k$ wird von dem Abtastphasenfehlerdetektor 1 über einen Signalausgang 24 und eine Leitung 25 an ein nachgeschaltetes Schleifenfilter 26 abgegeben. Das Schleifenfilter 26 ist über eine Leitung 27 mit einem nachgeschalteten Phasenzähler 28 verbunden. Bei dem Phasenzähler 28 handelt es sich beispielsweise um einen numerisch kontrollierten Oszillator. Der Phasenzähler 28 gibt ein Abtastphasenfehlersteuersignal $\tau$ über eine Leitung 29 an den Interpolator 14 ab. Bei der in Figur 9 dargestellten Ausführungsform arbeitet der Analog/Digital-Wandler 10 mit einem freilaufenden Arbeitstakt. Die Korrektur der Abtastphase erfolgt mittels des Interpolators 14. Bei der in dem Empfänger 2 vorgesehenen entscheidungsrückgekoppelten Taktregelung wird die Sequenz des verrauschten Empfangssignals $z_k$ mit der rauschfreien Sequenz der entschiedenen Symbole $\hat{a}_k$ korreliert. Das abgetastete Empfangssignal $z_k$ enthält Informationen über den Abtastphasenfehler. Den am Ausgang des Entscheiders 18 anliegenden Schätzwerten $\hat{a}_k$ wird eine korrekte Entscheidung $\hat{a}_k = a_k$ unterstellt, da der adaptive Entzerrer 16 innerhalb des Empfängers 2 bereits eingestellt ist. Der Abtastphasenfehlerdetektor 1 generiert ein Abtastphasenfehlersignal $v_k$ in Abhängigkeit von dem rauschfreien entschiedenen Symbol $\hat{a}_k$ und dem verrauschten Eingangssignal $z_k$, wobei der Mittelwert des Abtastphasenfehlersignals $v_k$ $E[v(k)] = f(\tau)$ zu dem Abtastphasenfehler $\tau$ näherungsweise proportional ist. Dieses Abtastphasenfehlersignal $v_k$ wird als Kriterium für die Taktregelung benutzt.

Zur Generierung des Abtastphasenfehlersignals v wird vom Abtastphasenfehlerdetektor nur eine Sequenz von wenigen Symbolen $z_k$ bzw. $e_k$ und $\hat{a}_k$ der Länge L benötigt.

Bei dem in Figur 9 dargestellten Beispiel umfasst die Übertragungsstrecke H das Sendefilter 6, den Digital/Analog-Wandler 8, den Übertragungskanal 9, den Analog/Digital-Wandler 10, das Empfangsfilter 12, den Interpolator 14 sowie den Entzerrer 16. Die Übertragungsstrecke H wird durch ihre Impulsantwort h(t) charakterisiert.

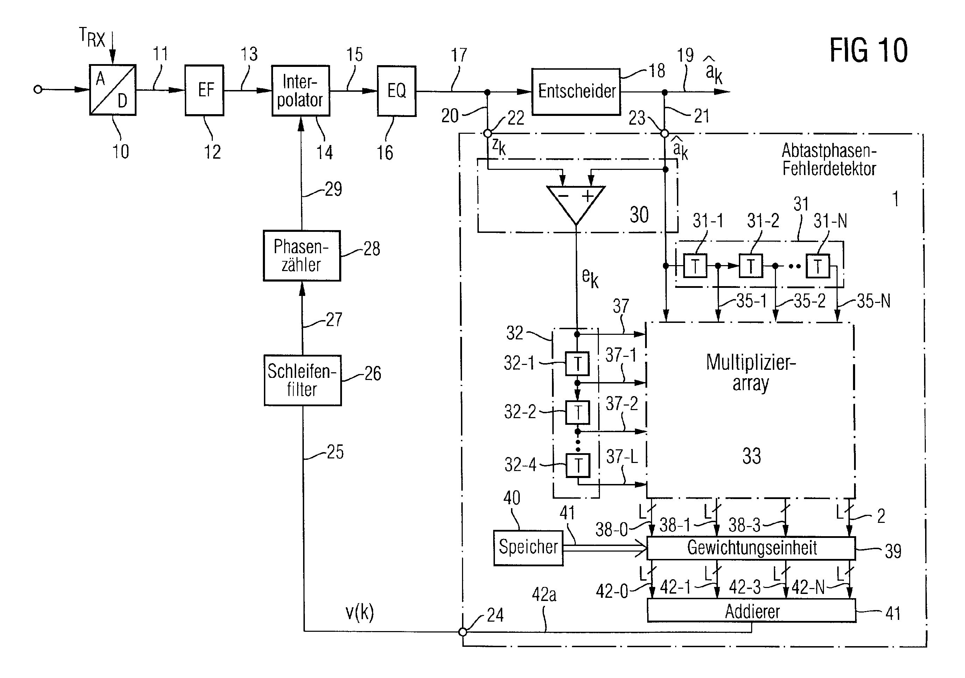

Figur 10 zeigt den schaltungstechnischen Aufbau bei einer bevorzugten Ausführungsform des erfindungsgemäßen Abtastphasenfehlerdetektors 1.

Der erfindungsgemäße Abtastphasenfehlerdetektor 1 bzw. die Berechnungsschaltung 1 zur Berechnung eines Abtastphasenfehlersignals v umfasst bei der in Figur 10 dargestellten Ausführungsform eine Subtraktionsschaltung 30, die ein Differenzsignal $e_k$ zwischen dem durch den Entzerrer entzerrten digitalen Empfangssignal $z_k$ und dem durch den Entscheider 18 gebildeten Schätzwert $\hat{a}_k$ erzeugt.

Die Berechnungsschaltung 1 weist eine erste Verzögerungsgliedkette 31 und eine zweite Verzögerungsgliedkette 32 auf. Die erste Verzögerungsgliedkette 31 besteht aus N (N=L-1) Verzögerungsgliedern 31-1, 31-2, ... 31-N. Die zweite Verzögerungsgliedkette 32 besteht in gleicher Weise aus mehreren seriell verschalteten Verzögerungsgliedern 32-1, 32-2, 32-N. Die erste Verzögerungsgliedkette 31 verzögert den von dem Entscheider 18 abgegebenen digitalen Schätzwert $\hat{a}_k$. Die zweite Verzögerungsgliedkette 32 verzögert das entzerrte Differenzsignal $e_k$. Bei einer alternativen Ausführungsform wird das entzerrte digitale Empfangssignal $z_k$ ohne Zwischenschaltung eines Subtrahierers direkt an die zweite Verzögerungsgliedkette 32 angelegt.

Die Berechnungsschaltung 1 umfasst ferner einen Multiplizier-Array 33, das den unverzögerten digitalen Schätzwert $\hat{a}_k$ und die durch die Verzögerungsschaltung 31 verzögerten Schätzwerte, die an den Ausgängen der Verzögerungsglieder 31-i anliegen, mit dem entzerrten Signal $e_k$ und mit den durch die Verzögerungsgliedkette 32 verzögerten Ausgangssignal aller Verzögerungsglieder 32-i der zweiten Verzögerungsgliedkette 32 zu Produktsignalen multipliziert. Hierzu empfängt das Multiplizier-Array 33 über eine Leitung 34 das unverzögerte digitale Schätzwertsignal $\hat{a}_k$, über Leitungen 35-i die Ausgangssignale der Verzögerungsglieder 31-i der ersten Verzögerungsgliedkette 31, über eine Leitung 36 das unverzögerte entzerrte Differenzsignal $e_k$ und über Leitungen 37-i die Ausgangssignale der Verzögerungsglieder 32-i der zweiten Verzögerungsgliedkette 32. Das Multiplizier-Array 33 umfasst $L^2$ Multiplikatoren und

$L^2$ Signalausgänge zur Abgabe der Produktsignale über Leitungen 38 an eine nachgeschaltete Gewichtungseinheit 39. Die Gewichtungseinheit 39 multipliziert die durch das Multiplizier-Array 33 erzeugten Produktsignale mit einstellbaren Gewichtungskoeffizienten b. Die Gewichtungsfaktoren b sind bei einer ersten Ausführungsform fest verdrahtet. Bei einer alternativen Ausführungsform sind die Gewichtungsfaktoren einstellbar und programmierbar. Bei der in Figur 10 dargestellten Ausführungsform sind die Gewichtungsfaktoren in einem programmierbaren Speicher 40 abgelegt und sind über Leitungen 41 in die Gewichtungseinheit 39 auslesbar. Bei einer bevorzugten Ausführungsform ist der Speicher 40 über eine (nicht dargestellte) Interface-Schaltung extern programmierbar.

Der Abtastphasenfehlerdetektor 1, wie er in Figur 10 dargestellt ist, weist zudem einen Addierer 41 auf, der die gewichteten Produktsignale über Leitungen 42 erhält und zu dem Abtastphasenfehlersignal $v_k$ addiert. Der Ausgang des Addierers 41 ist über eine Leitung 42 mit dem Ausgang 24 des Abtastphasenfehlerdetektors 1 verbunden. Das Ausgangssignal des Abtastphasenfehlerdetektors 1 wird bei der in Figur 10 dargestellten Ausführungsform des Empfängers 2 durch das Schleifenfilter 26 gefiltert und anschließend an einen Phasenzähler 28 abgegeben, der ein Abtastphasenfehlersteuersignal über die Leitung 29 an den Interpolator 14 abgibt. Der in Figur 10 dargestellte Empfänger weist einen Analog/Digital-Wandler 10 mit freilaufendem Arbeitstakt auf.

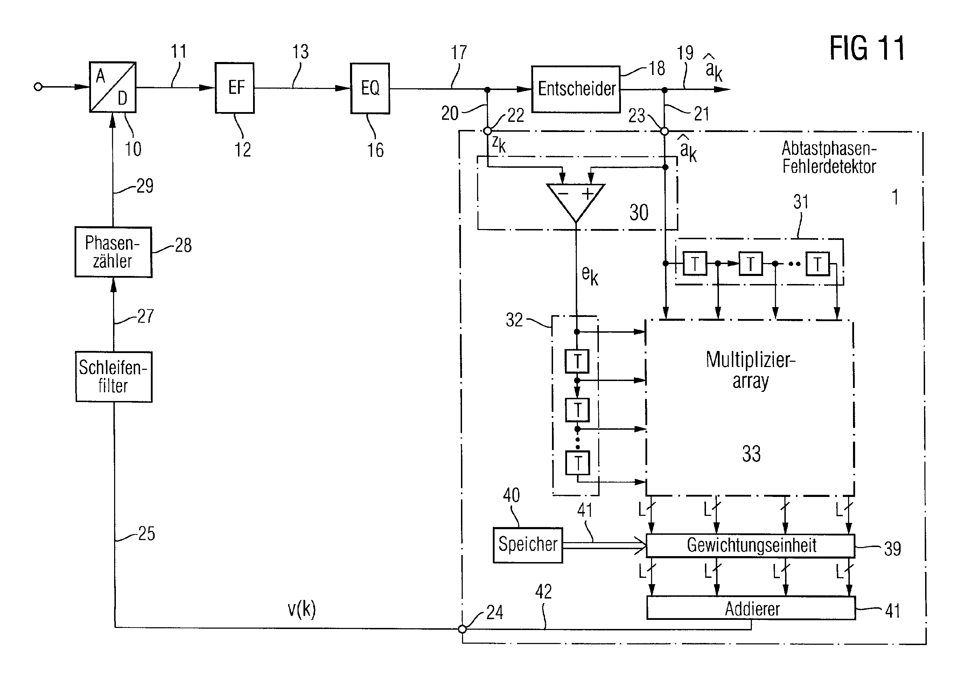

Der in Figur 11 dargestellte Empfänger 2 weist keinen freilaufenden Arbeitstakt auf und der Analog/Digital-Wandler 10 wird durch den Phasenzähler 28 über die Leitung 29 angesteuert. Der schaltungstechnische Aufbau des Abtastphasenfehlerdetektors 1 ist in beiden Fällen identisch.

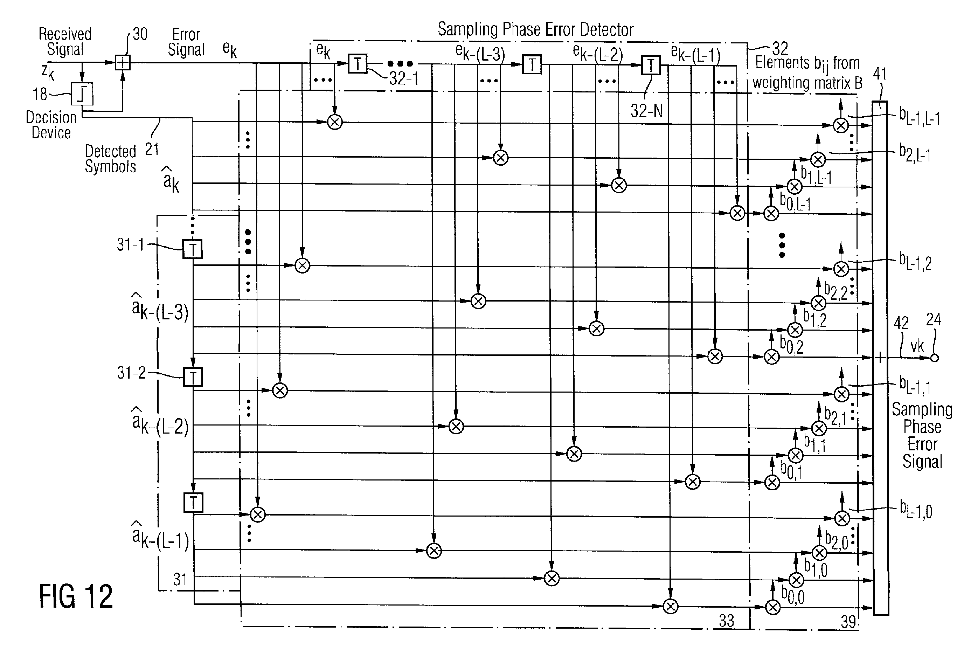

Figur 12 zeigt eine besonders bevorzugte Ausführungsform der erfindungsgemäßen Berechnungsschaltung 1 mit einem LxL Multiplizier-Array 33. Bei der in Figur 12 dargestellten Ausführungsform beträgt die Anzahl der seriell verschalteten Verzögerungsglieder 31-i innerhalb der ersten Verzögerungsgliedkette 31 und der Verzögerungsglieder 32-i innerhalb der zweiten Verzögerungsgliedkette 32 jeweils N=L-1.

Die Verzögerungen der Signale $e_{k-i}$ in der Verzögerungsgliedkette 32 und der entschiedenen Symbole $\hat{a}_{k-j}$ der Verzögerungsgliedkette 31 betragen jeweils i bzw. j Takte. Die Signale in den Verzögerungsgliedketten 31, 32 werden jeweils miteinander multipliziert. Die Differenz der Verzögerung der Signale $e_{k-i}$ und $\hat{a}_{k-j}$, die miteinander multipliziert werden, betragen i-j=x Takte.

Es gibt insgesamt $L^2$ Kombinationen bzw. Produkte, die aus den Signalen $e_{k-i}$ und $\hat{a}_{k-j}$ gebildet werden. Es ist lediglich notwendig, derart viele Kombinationen der Signale $e_{k-i}$ und $\hat{a}_{k-j}$ miteinander zu multiplizieren, dass die Taktdifferenz i-j=x jeweils einmal vorhanden ist.

In einem in Bezug auf den Implementierungsaufwand optimierten Abtastphasenfehlerdetektor mit einem LxL Multiplizier-Array kann die Verzögerungsdifferenz x im Prinzip den Wertebereich x=-(L-1)...L-1 annehmen. Wenn die Struktur des erfindungsgemäßen Abtastphasendetektors in Bezug auf den minimalen Phasenjitter optimiert wird, werden für die Verzögerungsdifferenz x nur L verschiedene Werte implementiert. Der Wertebereich für x beträgt

$$x=-((L-1)/2)...(L-1)/2,$$

wenn L ungerade ist
oder x=-(L 1/2)...L 1/2, wenn L gerade ist.

Aufgrund der unterschiedlichen Anordnungen der Bauelemente $B_{i,j}$ werden die Optimierungsmöglichkeiten bezüglich der Jitterreduktion voll ausgenutzt, da der Self-Noise Jitter stark davon abhängt, welche Werte auf den Nebendiagonalen der Matrix ungleich Null gewählt sind.

Das Multiplizier-Array 33 umfasst $L^2=(N+1)^2$ Multiplizierer, die jeweils ein Ausgangssignal der ersten Verzögerungsgliedkette 31 zu einem Ausgangssignal der zweiten Verzögerungsgliedkette 32 zu Produktsignalen multiplizieren. Die Produktsignale werden der Gewichtungseinheit 39 zugeführt, die ebenfalls $L^2$ Multiplizierer zur Gewichtung der Produktsignale aufweist. Die Gewichtungsfaktoren $b_{ij}$ der Gewichtungsschaltung 39 sind vorzugsweise einstellbar. Sie können aus der Speichereinheit 40 ausgelesen werden. Der Addierer 41 addiert die gewichteten Produktsignale zu dem Abtastphasenfehlersignal $v_k$.

Der in Figur 12 dargestellte Abtastphasenfehlerdetektor 1 lässt sich wie folgt beschreiben:

$$(2)$$

$$v(\tau) = \left\{ [e_0(\tau) \quad e_1(\tau) \quad \cdots \quad \cdots \quad e_{L-1}(\tau)] \cdot \begin{bmatrix} b_{0,0} & b_{0,1} & b_{0,2} & \cdots & b_{0,L-1} \\ b_{1,0} & b_{1,1} & b_{1,2} & & \\ b_{2,0} & b_{2,1} & b_{2,2} & & \\ & & & \ddots & \\ b_{L-1,0} & & & & b_{L-1,L-1} \end{bmatrix} \cdot \begin{bmatrix} \hat{a}_0 \\ \hat{a}_1 \\ \vdots \\ \vdots \\ \hat{a}_{L-1} \end{bmatrix} \right\}$$

oder vereinfacht:

$$(3)$$

$$v_k(\tau) = \sum_{i=0}^{L-1} e_{i+k} \quad \sum_{j=0}^{L-1} \hat{a}_{j+k} \quad \cdot b_{i,j}$$

Hierbei sind $e_i(\tau)$ die entzerrten Differenzwerte und $\hat{a}_i$ die durch den Entscheider 18 entschiedenen Symbole.

Wird das verrauschte digitale Empfangssignal $z_k$ ohne Zwischenschaltung des Subtrahierers 30 direkt an die zweite Verzögerungsgliedkette 32 angelegt, lässt sich die Verknüpfung zwischen den beiden Sequenzen $z_k$ und der Schätzwert $\hat{a}_k$ in dem entscheidungsrückgekoppelten Abtastphasenfehlerdetektor 1 im allgemeinen durch eine Gewichtungsmatrix B mit ihren Elementen $B_{i,j}$ beschrieben.

Es gilt:

$$V = z \times B \times \hat{a}^T; \text{ mit } z = a \times H$$

ergibt sich:

$$V = a \times H \times B \times \hat{a}^T$$

und wir erhalten die Gleichung (4).

Verwendet man anstatt z das Differenzsignal $e = z - \hat{a} \times H$ erhalten wir Gleichung (2).

$V = e \times B \times \hat{a}^T$; mit $e = a \times H - \hat{a} \times I \times h$ ergibt sich:

$$V = (a \times H - \hat{a} \times I \times h_0) \times B \times \hat{a}^T$$

In Gleichung 4 fallen die Elemente auf der Hauptdiagonalen der Matrix weg.

Das Gesamtsystem für den Fall, dass $Z_k$ und $\hat{a}_k$ Eingangssignale des Abtastphasendetektors sind, lässt sich durch folgende Gleichung beschreiben:

$$(4)$$

$$v(\tau) = \left\{ \begin{bmatrix} a_0 & a_1 & \cdots & \cdots & a_{L-1} \end{bmatrix} \cdot \begin{bmatrix} h_{0,0}(\tau) & h_{0,1}(\tau) & h_{0,2}(\tau) \ldots & h_{0,L-1}(\tau) \\ h_{1,0}(\tau) & h_{1,1}(\tau) & h_{1,2}(\tau) & \\ h_{2,0}(\tau) & h_{2,1}(\tau) & h_{2,2}(\tau) & \\ & & \ddots & \\ h_{L-1,0}(\tau) & & & h_{L-1,L-1}(\tau) \end{bmatrix} \cdot \begin{bmatrix} b_{0,0} & b_{0,1} & b_{0,2} \ldots & b_{0,L-1} \\ b_{1,0} & b_{1,1} & b_{1,2} & \\ b_{2,0} & b_{2,1} & b_{2,2} & \\ & & \ddots & \\ b_{L-1,0} & & & b_{L-1,L-1} \end{bmatrix} \cdot \begin{bmatrix} \hat{a}_0 \\ \hat{a}_1 \\ \vdots \\ \vdots \\ \hat{a}_{L-1} \end{bmatrix} \right\}$$

Für den Fall, dass $e_k$ und $\hat{a}_k$ Eingangssignale für das Phasendetektors sind, ergibt sich ebenfalls die obige Gleichung, wobei allerdings die Matrixelemente $h_{0,0}$, $h_{1,1}$, $h_{2,2}$ .... den Wert 0 annehmen.

Die äquivalente zeitdiskrete Kanalimpulsantwort h(t) der Übertragungsstrecke H wird durch die Matrix H($\tau$) mit ihren Elementen $h_{m,n(\tau)}$ angegeben.

Der Mittelwert des Abtastphasenfehlersignals E[v(k)], d.h. die Timing-Funktion f($\tau$) ergibt sich in diesem allgemeinen Fall zu:

$$(5)$$

$$f(\tau) = E[v(k)] = E[a^2] \cdot \sum_{i=1}^{L} \sum_{k=1}^{L} h_{i,k}(\tau) \cdot b_{k,i}$$

$k \neq i$, wenn $e_k$ anstatt $z_k$ an den erfindungsgemäßen Abtastphasendetektor angelegt wird.

Bei dem in Figur 12 dargestellten Abtastphasenfehlerdetektor 1 handelt es sich um einen universell einsetzbaren Abtastphasenfehlerdetektor, der alle Freiheitsgrade für beliebige Anwendungen bietet.

Ausgehend von dem in Figur 12 dargestellten universell einsetzbaren Abtastphasendetektor 1 gemäß der Erfindung können weitere für bestimmte Anwendungen optimierte Abtastphasenfehlerdetektoren systematisch hergeleitet werden.

Bei der in Gleichung 4 angegebenen Gewichtungsmatrix B bzw. bei der in Figur 12 dargestellten schaltungstechnischen Implementierung dieser Matrix B ist folgendes zu beachten:

Die Größe bzw. die Dimension der Matrix B hängt von der Länge L der Impulsantwort h(t) der Übertragungsstrecke H ab. Beträgt die (merkliche) Dauer der Impulsantwort h(t) beispielsweise fünf Taktzyklen, umfasst das Multiplizier-Array 33 beispielsweise fünf mal fünf Multiplikatoren ($L^2$), d.h. für die Anzahl der Verzögerungsglieder innerhalb der Verzögerungsgliedketten beträgt jeweils N=4.

Innerhalb der Impulsantwortmatrix H sind die Koeffizienten auf der Diagonalen und der Achsen parallel zu der Hauptdiagonalen gleich, d.h. die Impulsantwortmatrix H weist eine sog. Töplitz-Struktur auf. Entsprechend weisen auch die Koeffizienten auf den Diagonalen der Gewichtungsmatrix B gleiche Werte auf.

Für eine funktionierende Abtastphasenregelung benötigt man mindestens einen Gewichtungskoeffizienten auf jeder Nebendiagonalen der Gewichtungsmatrix B.

Bei einer bevorzugten Ausführungsform sind alle Koeffizienten der Hauptdiagonale der Gewichtungsmatrix gleich Null und es ist pro Spalte der Gewichtungsmatrix nur ein Koeffizient ungleich Null.

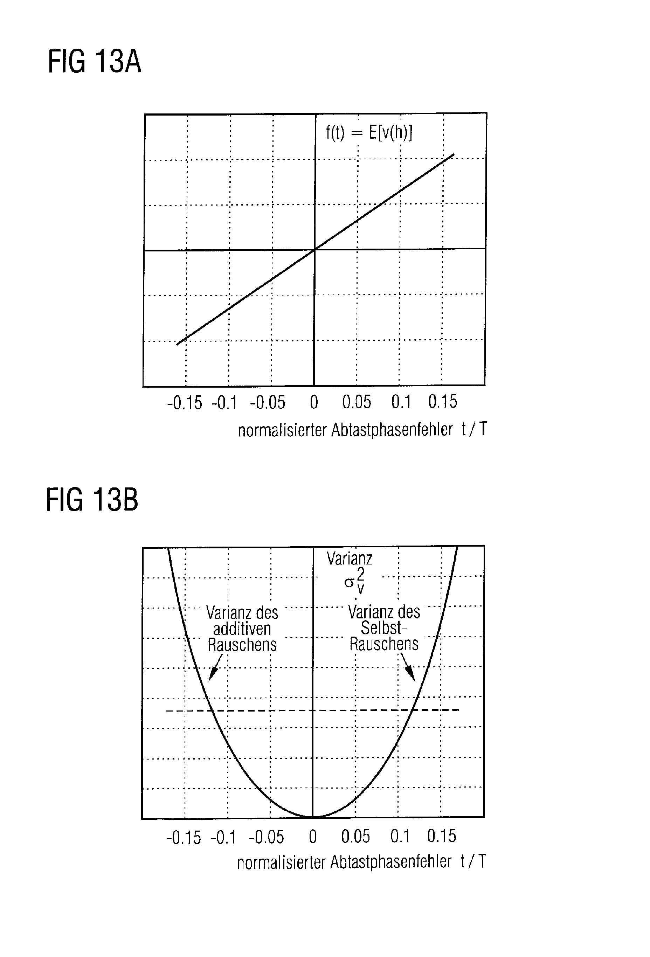

Die Gewichtungskoeffizienten werden vorzugsweise derart eingestellt, dass eine ideale Kennlinie, wie sie in Figur 13a dargestellt ist, entsteht.

Sind mehrere Koeffizientenwerte auf einer Diagonalen ungleich Null, so hat dies bezüglich der Jittersignalreduktion keinen zusätzlichen Effekt, da dieser Effekt bereits durch das Schleifenfilter 26 erzielbar ist.

Je weniger Koeffizientenwerte die Gewichtungsmatrix B aufweist, die ungleich Null sind, desto weniger Schätzwerte $a_k$ und Empfangssignalwerte $z_k$ werden korreliert, und desto weniger Multiplizierer müssen in dem Multiplizier-Array 33 und in der Gewichtungsschaltung 39 vorgesehen werden. Nach einer vorgenommenen Optimierung lässt sich daher der Abtastphasenfehlerdetektor 1, wie er in Figur 12 dargestellt ist, auf einfachere Schaltungen reduzieren.

Der Abtastphasenfehlerdetektor gemäß der Erfindung generiert ein Abtastphasenfehlersignal $v_k$, dessen Mittelwert näherungsweise proportional zur Differenz zwischen der unbekannten richtigen Abtastphase $\tau_0$ und dem gegenwärtigen Schätzwert $\hat{\tau}$ ist:

$$\tau=\tau_0-\hat{\tau}$$

Der Mittelwert des Abtastphasenfehlersignals $E[v_n]$ ist eine zum Abtastfehler näherungsweise proportionale Größe, die erfindungsgemäß als Kriterium für die Taktregelung einsetzbar ist. Figur 13a zeigt den Mittelwert des Abtastphasenfehlersignals $v_k$. Die in Figur 13 dargestellte ideale Kennlinie der Abtastphasenfunktion $f(\tau)$ hat einen eindeutigen Nulldurchgang bei der optimalen Abtastphase $\tau=0$. Die Abtastphasenfunktion ist monoton steigend und idealer Weise bezüglich des Ursprungspunktes symmetrisch.

Figur 13b zeigt die Varianz bzw. den Jitter des Abtastphasenfehlersignals $v_k$. Die Varianz des Ausgangssignals des Abtastphasendetektors 1 bezeichnet die Qualität des Abtastphasenfehlerdetektors. Die Varianz ist dabei ein Maß für den mittleren quadratischen Fehler, der bei der Schätzung des Abtastfehlers durch den Abtastphasenfehlerdetektor gemacht wird. Der mittlere quadratische Fehler ist proportional zu dem Phasenjitter.

Die Rauschstörung im Taktregelkreis wird durch zwei Quellen des Jitters hervorgerufen. Diese beiden Komponenten des Rauschens werden auch als additives Rauschen und Selbstrauschen bezeichnet. Das additive Rauschen bzw. der zufällige Jitter wird durch alle Rauschsignale und Störsignale hervorgerufen, die im Empfangssignal des Empfängers enthalten sind. Das sog. Selbstrauschen wird durch einen systematischen Jitter hervorgerufen, der in dem Abtastphasenfehlerdetektor 1 selbst erzeugt wird. Der Grund für diesen systematische Jitter liegt darin, dass das Abtastphasenfehlersignal $v_k$ mit Hilfe der Eingangssignale â und $z_k$ erzeugt wird, die auf einer Sequenz von Zufallswerten $a_k$ basieren.

Figur 13b zeigt den prinzipiellen Verlauf der Varianz des Abtastphasenfehlersignals. Ist der Abtastphasenfehler $\tau=0$, so ist der durch den systematischen Jitter hervorgerufene Anteil der Varianz am kleinsten und beträgt idealer Weise gleich Null. Die Varianz wächst mit dem Abtastphasenfehler $\tau$. Im Betrieb des erfindungsgemäßen Regelkreises variiert die Abtastphase $\hat{\tau}$ um den idealen Wert $\tau_0$, so dass Selbstrauschen auftritt. Die additive Rauschkomponente ist unabhängig vom Abtastphasenfehler immer vorhanden. Bei einer idealen Einstellung des erfindungsgemäßen Abtastphasenfehlerdetektors 1, wie er beispielsweise in Figur 12 dargestellt ist, weist der entscheidungsrückgekoppelte Taktregelkreis einen minimalen Jitter im eingeschwungenen Zustand auf. Dies hat zur Folge, dass die Bitfehlerrate BER des empfangenen Signals ebenfalls minimal ist.

Die Varianz des Selbstrauschens des Abtastphasenfehlerdetektors im Taktregelkreis lässt sich wie folgt beschreiben.

$$(7)$$

$$\sigma_{vs}^2 = E\left[a^4\right]\cdot\sum_{i=1}^{L}\left(\sum_{k=1}^{L}h_{i,k}\cdot b_{k,i}\right)^2 + E^2\left[a^2\right]\cdot\left(\begin{array}{c}\sum_{i=1}^{L}\sum_{j=1}^{L}\left(\sum_{k=1}^{L}h_{i,k}\cdot b_{k,i}\right)^2 + \sum_{i=1}^{L}\sum_{j=1}^{L}\left(\sum_{k=1}^{L}h_{i,k}\cdot b_{k,i}\sum_{l=1}^{L}h_{l,j}\cdot b_{i,l}\right) - \\ 3\cdot\sum_{i=1}^{L}\left(\sum_{k=1}^{L}h_{i,k}\cdot b_{k,i}\right)^2\end{array}\right).$$

Die Abtastwert der Impulsantwort $a_{i,k}$ hängen dabei von der Abtastphase ab.

Die Varianz des additiven Rauschens hängt ebenfalls von der Gewichtungsmatrix B ab. Sie beträgt für den Fall, dass das additive Rauschen weißes Rauschen mit der Varianz $\sigma n^2$ ist:

$$(8)$$

$$\sigma_{va}^2 = E\left[a^2\right]\cdot\sigma_n^2\cdot\sum_{i=0}^{L}\sum_{j=0}^{L}b_{i,j}^2$$

Der Jitter des erfindungsgemäßen Abtastphasendetektors 1 lässt sich für verschiedene Gewichtungsmatrizen B rechnen und systematisch minimieren, da die Impulsantwort $h(\tau)$ der zeitinvarianten Übertragungsstrecke in der Regel bekannt ist.

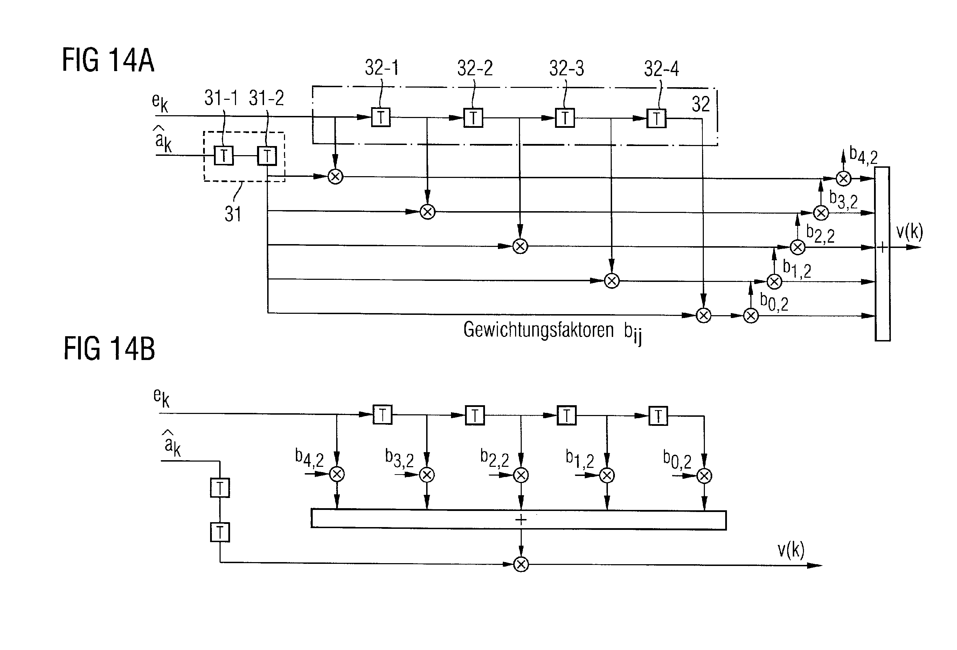

Der in Figur 12 dargestellte Abtastphasenfehlerdetektor lässt sich für bestimmte Anwendungen auf einfachere Schaltungen reduzieren. Bei dem in Figur 14a dargestellten Beispiel wird ein stark vereinfachtes Multiplizier-Array 33 vorgesehen, welches das Ausgangssignal des zweiten Verzögerungsgliedes der ersten Verzögerungsgliedkette 31 mit dem unverzögerten Differenzwert $e_k$ sowie dem Ausgangssignal aller Verzögerungsglieder der zweiten Verzögerungsgliedkette 32 zu Produktsignalen multipliziert. Man erhält bei dieser vereinfachten Struktur die in Figur 14a dargestellte Schaltung, die zu der in Figur 14b dargestellten Schaltung äquivalent ist.

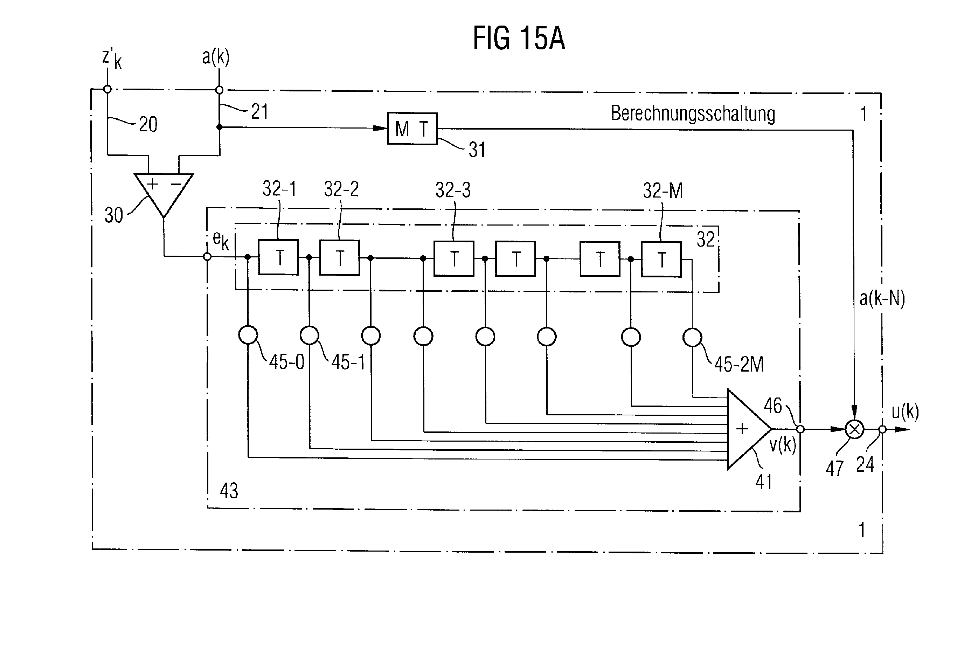

Man erhält auf diese Weise eine Schaltungsstruktur, die der in Figur 15a dargestellten Schaltungsstruktur der Berechnungsschaltung 1 entspricht. Diese Schaltungsstruktur ist bereits in der deutschen Patentanmeldung DE 10212913.4 beschrieben, auf deren Beschreibung hiermit Bezug genommen wird. Bei dem in Figur 15a dargestellten Sonderfall der erfindungsgemäßen Berechnungsschaltung 1, wie sie in Figur 12 dargestellt ist, wird das Fehlersignal $e_k$ über ein lineares, vorzugsweise antisymmetrisches digitales Filter geleitet asymmetrischen Impulsantworten und das Filterausgangssignal anschließend mit den entschiedenen Symbolwerten $\hat{a}_k$ korreliert.

Die Timing-Funktion F (von $\tau$) ist der in Figur 15a dargestellten Berechnungsschaltung wird durch folgende Gleichung beschrieben:

$$f(\tau) = \sum_i c_i \cdot h_i(\tau);$$

mit

$$c_i = b_{i, \frac{L-1}{2}}$$

Die Funktion $f(\tau)$ wird durch die Abtastwerte der Impulsantwort $h_i(\tau) = h(i \times T + \tau)$ und die frei wählbaren Koeffizienten TRk

$$c_i = b_{i, \frac{L-1}{2}}$$

des FIR-Filters bestimmt. Auf diese Weise wird der in Figur 15a dargestellte Synchronisiertyp unterschiedlichen Pulsformen $h(t)$ angepasst.

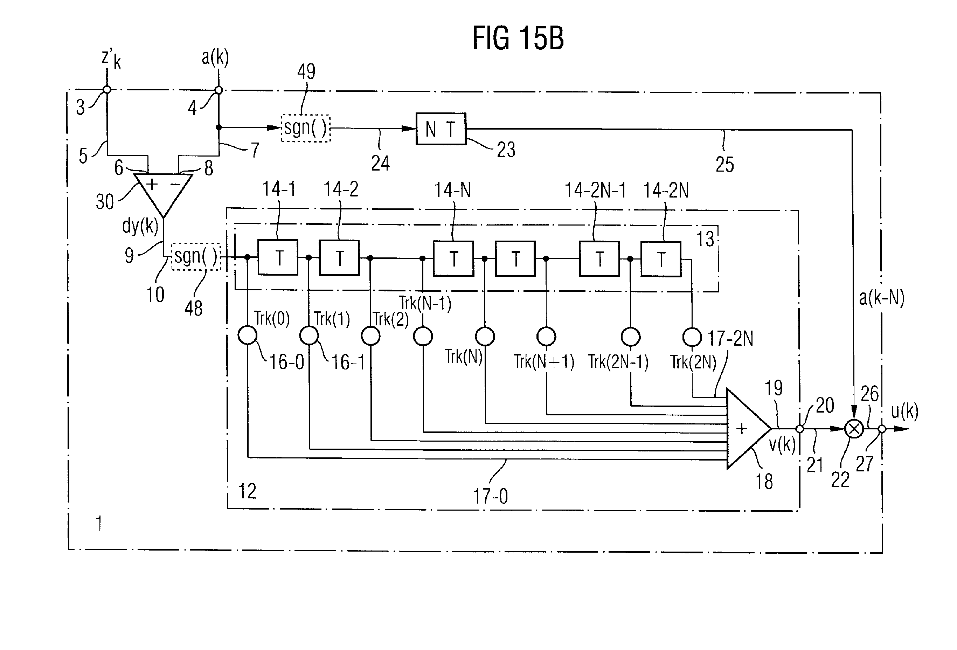

Die erfindungsgemäße Berechnungsschaltung 1, wie sie in Figur 15 dargestellt ist, dient beispielsweise zur Berechnung eines Taktregelkriteriums $v_k$ für eine Taktphasenregelungsschaltung eines Transceivers, wie er in Figur 2 dargestellt ist. Die Berechnungsschaltung 1 gemäß Figur 15a befindet sich innerhalb der Steuerschaltung und generiert das Taktregelkriterium u.

Die Berechnungsschaltung 1 enthält die Subtraktionsschaltung 30, die ein Differenzsignal $e_k$ zwischen einem entzerrten digitalen Empfangssignal $z_k$ und einem gebildeten digitalen Schätzwertsignal $\hat{a}_k$ bildet. Hierzu weist die Berechnungsschaltung 1 einen ersten Signaleingang zum Anlegen des von einem Entzerrer entzerrten digitalen Empfangssignal $e_k$ und einen zweiten Signaleingang zum Anlegen des von einem Entscheider gebildeten Schätzwertsignals $\hat{a}_k$ auf. Der erste Signaleingang für das entzerrte digitale Empfangssignal $e_k$ wird über eine interne Leitung an einen ersten Signaleingang des Subtraktionsschaltung 30 angelegt. Der zweite Eingang der Berechnungsschaltung wird über eine interne Leitung mit einem zweiten Eingang der Subtraktionsschaltung 30 verbunden. Die Subtraktionsschaltung 30 bildet das Differenzsignal $e_k$ zwischen dem digitalen Empfangssignal $z_k$ und dem durch den Entscheider 18 gebildeten Schätzwertsignal $\hat{a}_k$ und gibt es über einen Ausgang und eine Leitung an einen Eingang eines nicht rekursiven digitalen Filters 43 ab. Das nicht rekursive digitale Filter 43 dient zum Filtern des angelegten Differenzsignals $e_k$. Das nicht rekursive digitale Filter 43 innerhalb der erfindungsgemäßen Berechnungsschaltung 1 enthält eine Verzögerungsgliedkette 32-2 aus seriell verschalteten Verzögerungsgliedern 32-i. Die Anzahl der Verzögerungsglieder 32-i beträgt $2 \times M + 1$. Die Ausgangsignale der Verzögerungsglieder 32-i werden über Leitungen jeweils Multiplizierern 45-i zugeführt, die die Ausgangssignale der Verzögerungsglieder mit einstellbaren Gewichtungskoeffizienten b multiplizieren. Die mit den Gewichtungs- bzw. Filterkoeffizienten b gewichteten Ausgangssignale der Verzögerungsglieder 32-i werden über Leitungen einem Addierer 41 zugeführt, der die gewichteten Verzögerungsgliederausgangssignale zu einem digitalen Filterausgangssignal addiert. Das gebildete digitale Filterausgangssignal wird über eine Leitung an einen Ausgang 46 des nicht rekursiven digitalen Filters 43 angelegt. Der Ausgang 46 des nicht rekursiven digitalen Filters 43 ist über Leitung an einen weiteren Multiplizierer 47 angeschlossen.

Die Berechnungsschaltung 1 enthält ferner eine Verzögerungsschaltung 31. Die Verzögerungsschaltung 31 empfängt das digitale Schätzwertsignal $\hat{a}_k$, das von dem Entscheider 18 erzeugt wird, und verzögert es mit der Verzögerungszeit M x T der Verzögerungsglieder bis zum mittig gelegenen Verzögerungsglied M. Das durch die Verzögerungsschaltung 31 zeitlich verzögerte Schätzwertsignal $\hat{a}_k$ wird über eine Leitung 48 dem Multiplizierer 47 zugeführt, der das Ausgangssignal der Verzögerungsschaltung 31 mit dem digitalen Filterausgangssignal des nicht rekursiven digitalen Filters 43 zu einem Taktregelkriterium u(k) multipliziert, das über eine interne Leitung an den Ausgang 24 der Berechnungsschaltung 1 abgegeben wird.

Die Verzögerungsglieder 32-i innerhalb der Verzögerungsgliedkette 32 werden mit der Symboltaktrate (T) des digitalen Empfangssignals getaktet. Die Anzahl der Verzögerungsglieder 32-i innerhalb der Verzögerungsgliedkette 32 ist vorzugsweise, jedoch nicht notwendigerweise, ungerade. Die Anzahl der Verzögerungsglieder 32-1 innerhalb der Verzögerungsgliedkette 32 beträgt 2 x M +1, wobei N bei bevorzugten Ausführungsformen der erfindungsgemäßen Berechnungsschaltung 1 etwa drei beträgt. Das gebildete Taktregelkriterium u(k) stellt den Wert der Faltung der Empfangsimpulsantwort mit der Impulsantwort des nicht rekursiven Filters 43 mit den Filterkoeffizienten 6 zum Zeitpunkt t = M x T dar.

Bei der erfindungsgemäßen Berechnungsschaltung 1 wird der Filterkoeffizient b(M) für das Ausgangssignal des innerhalb der Verzögerungsgliedkette 32 mittig gelegenen Verzögerungsgliedes 32-M auf null eingestellt. Die Filterkoeffizienten für die übrigen Verzögerungsglieder 32-i innerhalb der Verzögerungsgliedkette 32 weisen vorzugsweise Werte auf, die zu dem mittig gelegenen Filterkoeffizienten b(M) punktsymmetrisch sind, wenn der Impuls h(t) symmetrisch ist.

Für M=3 enthält die Verzögerungsgliedkette 32 sieben Verzögerungsglieder (N=2M+1) und das nicht rekursive digitale Filter 43 weist sieben einstellbare Filterkoeffizienten b auf. Die Werte der Filterkoeffizienten eines Filterkoeffizientensatzes sind vorzugsweise punktsymmetrisch zu dem M-ten Filterkoeffizienten b(M) für das mittig gelegene Verzögerungsglied 32-3.

Ein möglicher Filterkoeffizientensatz ist bei der erfindungsgemäßen Berechnungsschaltung 1:

$$b(i) = \{-1, -1, -1, 0, 1, 1, 1\}$$

Ein weiterer möglicher Filterkoeffizientensatz für die erfindungsgemäße Berechnungsschaltung 1 lautet:

$$b(i) = \{-1, +1, -1, 0, +1, -1, +1\}$$

Figur 15b zeigt eine weitere bevorzugte Ausführungsform der erfindungsgemäßen Berechnungsschaltung 1. Bei der in Figur 15b dargestellten bevorzugten Ausführungsform werden anstatt des digitalen Schätzwertsignals $\hat{a}_k$ nur dessen Vorzeichen und anstatt des Differenzsignals $e_k$ nur dessen Vorzeichen $e_k$ eingesetzt.

Die Berechnungsschaltung 1 bei der in Figur 15 dargestellten Ausführungsform enthält eine erste Vorzeichenschaltung 48, die der Subtraktionsschaltung 30 nachgeschaltet ist. Die Vorzeichenschaltung 48 erkennt das Vorzeichen des von der Subtraktionsschaltung 30 gebildeten Differenzsignalen und gibt lediglich das Vorzeichen an das nachgeschaltete, nicht rekursive digitale Filter 43 ab.

Die in Figur 15 dargestellte Berechnungsschaltung 1 enthält ferner eine zweite Vorzeichenschaltung 49, die der Verzögerungsschaltung vorgeschaltet ist. Die Vorzeichenschaltung 49 erkennt das Vorzeichen des digitalen Schätzwertsignals $\hat{a}_k$ und gibt das Vorzeichen an die Verzögerungsschaltung 31 ab. Auch bei der in Figur 15b dargestellten Ausführungsform wird der Filterkoeffizient b(M) für das mittig gelegene Verzögerungsglied 32-M zu null eingestellt und die übrigen Filterkoeffizienten werden im Hinblick auf ein möglichst gutes Einlaufund Jitterverhalten dimensioniert bzw. eingestellt, wobei die Filterkoeffizienten im wesentlichen punktsymmetrisch zu dem Filterkoeffizienten b(M) eingestellt werden.

Figur 6c zeigt den Verlauf des Mittelwertes des durch die Berechnungsschaltung 1 berechneten Taktregelkriteriums u(k) für M=3, d.h. für eine Verzögerungsgliedkette 32 mit sieben Verzögerungsgliedern 32-i, wobei der Filterkoeffizientensatz des in Figur 6c dargestellten Beispiels:

$$b(i) = (-1, -1, -1, 0, 1, 1, 1) \text{ lautet.}$$

Wie man aus Figur 6c erkennen kann, weist der Verlauf des Mittelwertes um den idealen Abtastzeitpunkt 7 x T (um n = 3 x T gegenüber dem Maximum des verzerrungsfreien Empfangsimpulses zeitverzögert) einen monoton ansteigenden Null-Durchgang auf. Die Taktphasenregelung der erfindungsgemäßen Berechnungsschaltung ist daher bei einem verzerrungsfreien Empfangsimpuls mit einem Rolloff-Faktor von 0,2 und einem Datenübertragungssystem ohne Excess-Bandbreite genauso wie die herkömmlichen Taktphasenregelungsschaltung, wie sie in Figur 6b dargestellt ist, stabil.

Figur 7 zeigt den Fall eines verzerrten Empfangsimpulses mit einem Rolloff-Faktor von 0,2 bei einer Excess-Bandbreite von 50%. Wie bereits zuvor ausgeführt ist die Taktphasenregelung, die eine herkömmliche Berechnungsschaltung, wie sie in den Figuren 5a, 5b dargestellt ist, instabil, wie sich aus dem S-förmigen Verlauf des Mittelwertes um den Abtastzeitpunkt gemäß Figur78b ergibt.

Figur 7c zeigt den Verlauf des Mittelwertes des durch die erfindungsgemäße Berechnungsschaltung 1 gemäß Figur 15 berechneten Taktregelkriteriums u für N = 3, d.h. für ein nicht rekursives digitales Filter 43 mit sieben Verzögerungsgliedern 32-i innerhalb der Verzögerungsgliedkette 32 und für folgenden Filterkoeffizientensatz:

b(i) = (0; -1; -0,7; 0; +0,7; 1; 0.) Wie man aus Figur 7c deutlich erkennen kann, weist der errechnete Mittelwert des Taktregelkriteriums u um den Abtastzeitpunkt 7 x T (d.h. um 3 x T gegenüber dem Maximum der Impulsantwort des Empfangsimpulses zeitverzögert) einen monoton steigenden Null-Durchgangsverlauf auf. Die Kennlinie der Taktphasenregelung ist daher in dem interessierenden Zeitbereich, d.h. um den idealen Abtastzeitpunkt herum, annähernd linear und somit stabil.

Figur 8a zeigt den Fall eines durch einen Entzerrerschaltkreis entzerrten Empfangsimpulses mit einem Rolloff-Faktor von 0,2 und einer Excess-Bandbreite von 50%. Wie man aus Figur 9c erkennen kann, ist der Verlauf des Mittelwertes des durch die erfindungsgemäße Berechnungsschaltung 1 berechneten Taktregelkriteriums für M=3 und folgendem Filterkoeffizientensatz:

b(i) = (0; -1; -0,75; 0; 0,75; 1; 0) im Bereich des Abtastzeitpunktes ebenfalls monoton linear ansteigend und somit stabil.

Wegen der Linearphasigkeit des Empfangsimpulses ergeben sich in allen Fällen völlig symmetrische Impulsantworten. Die Koeffizienten des Taktregelkriterium-Filters 43 werden daher zu dem Filterkoeffizienten Trk(n) für das mittig gelegene Verzögerungsglied 32-M punktsymmetrisch gewählt. Da in realen Datenübertragungssystemen stets lineare Amplituden und Laufzeitverzerrungen auftreten, d.h. Leitungsverzerrungen, Verzerrungen von Sende- und Empfangsfilter, ergeben sich auch entsprechende zum Zeitpunkt des Impulsmaximums unsymmetrische Empfangsimpulsantworten. Daher müssen die Filterkoeffizienten b(i) des nicht rekursiven digitalen Filters 43 zum Zeitindex M in diesem Fall nicht exakt punktsymmetrisch gewählt werden. Unabhängig davon wird der Filterkoeffizient b(M) stets auf null eingestellt. Durch die Dimensionierung der Filterkoeffizienten b(i) wird erreicht, dass der Null-Durchgang zum Zeitpunkt des Abtastzeitpunktes monoton ansteigend bzw. abfallend ist. Dabei werden die Filterkoeffizienten b(i) vorzugsweise derart eingestellt, dass der Null-Durchgang möglichst steil verläuft. Der Null-Durchgang wird, bezogen auf die Steuerung des Taktregelkriteriums vorzugsweise möglichst steil eingestellt, damit ein möglichst geringer Phasenjitter auftritt.

Das durch die erfindungsgemäße Berechnungsschaltung 1 gebildete Taktregelkriterium, wird vorzugsweise, wie in Figur 4 dargestellt, anschließend skaliert und mittels eines Addierers mit dem Entkopplungssignal zu einem Taktregelsteuersignal für das Schleifenfilter addiert. Die Filterkoeffizienten $C_i$ des adaptiven Entzerrers innerhalb des Transceivers werden mit den gespeicherten Kopplungskoeffizienten $g_i$ multipliziert und durch den Addierer mit dem Phasenreferenzsignalwert zu dem Entkopplungssignal addiert. Das Entkopplungssignal wird skaliert und mit dem durch die erfindungsgemäße Berechnungsschaltung 1 gebildeten Taktregelkriterium u(k) zu dem Taktregelsteuersignal addiert. Durch die Addition des Phasenreferenzsignalwertes kann die genaue Lage des Abtastzeitpunktes vorgegeben werden. Während bei Datenübertragungssystemen ohne Excess-Bandbreite für die Generierung des Entkopplungssignals der erste Koeffizient vor dem Hauptkoeffizienten des linearen Entzerrers ausreichend ist, werden bei Datenübertragungssystemen mit Excess-Bandbreite mehrere Filterkoeffizienten des adaptiven Entzerrers für die Generierung des Entkopplungssignals herangezogen. In ähnlicher Weise wie bei den Filterkoeffizienten des nicht rekursiven digitalen Filters 12 werden die Gewichtungskoeffizienten zur Generierung des Entkopplungssignals abhängig von dem Datenübertragungssystem insbesondere von der spektralen Form des Sendesignals und der zu erwartenden Leistungsverzerrung dimensioniert.

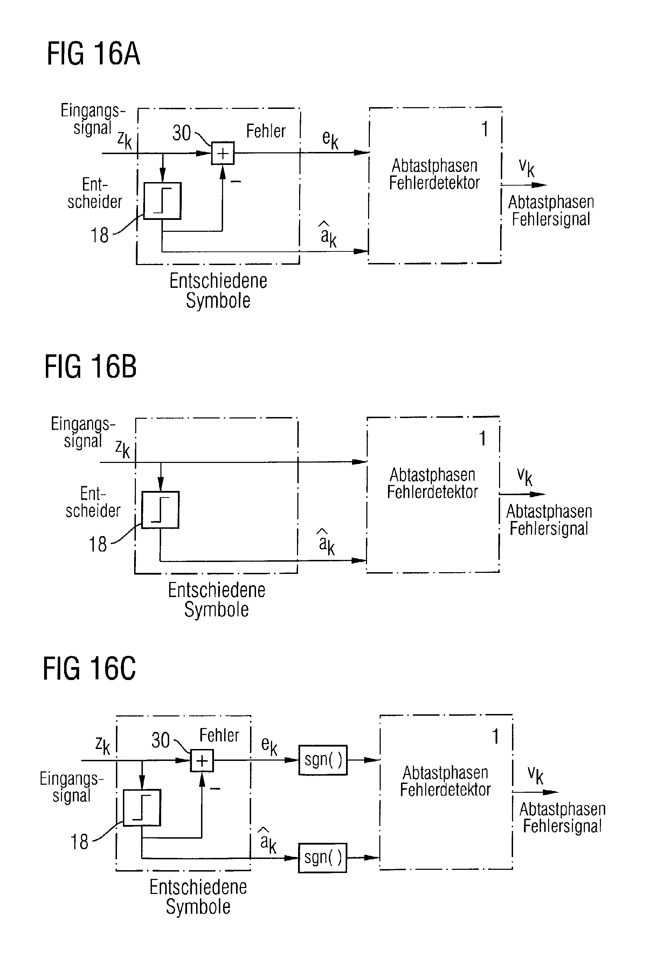

Figuren 16a, 16b zeigen verschiedene Implementierungsvarianten des erfindungsgemäßen Abtastphasenfehlerdetektors 1. In Figur 16a ist eine Subtrahierschaltung 30 vorgesehen, die bei der Implementierung in Figur 16b fehlt. Bei der in Figur 16b dargestellten Ausführungsform wird das Empfangssignal $z_k$ direkt dem Abtastphasenfehlerdetektor 1 ohne Zwischenschaltung der Subtraktionsschaltung zugeführt.

Figur 16c zeigt eine Implementierungsvariante bei der Vorzeichenerkennungsschaltungen vorgesehen sind.

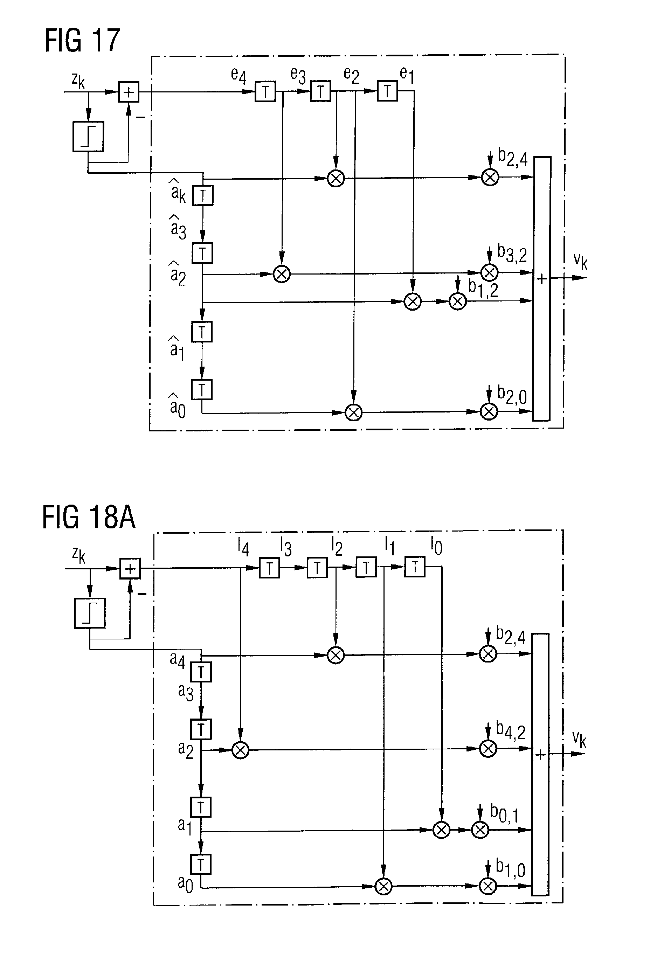

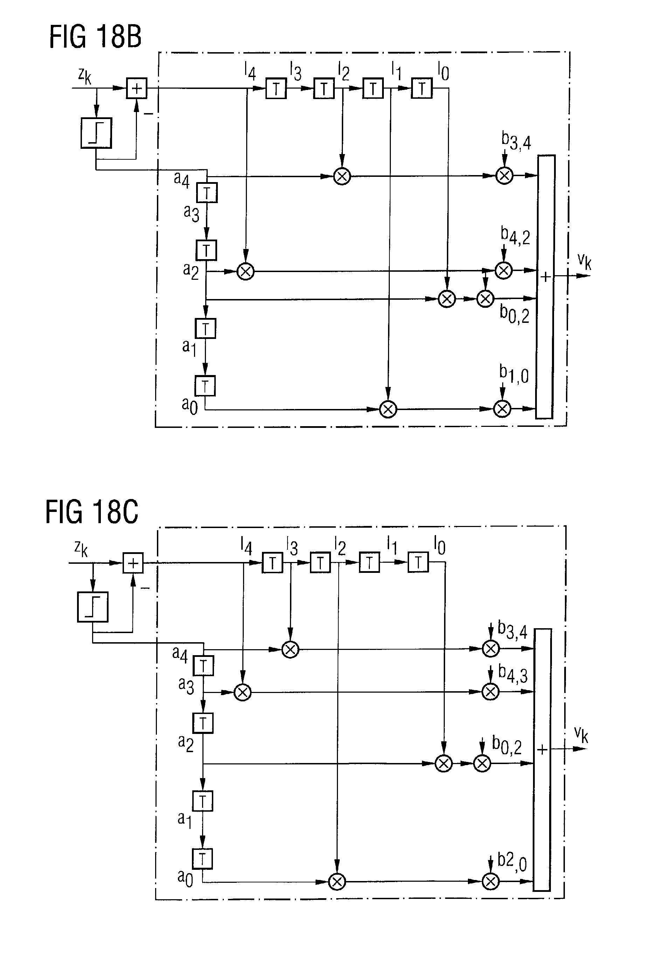

Figur 17 zeigt als Beispiel einen optimierten Abtastphasenfehlerdetektor 1 gemäß der Erfindung für einen Raised Cosine Impulse mit $\alpha=0,5$. In diesem Fall wurde das LxL (= 5x5)-Multiplizierer-Array so weit vereinfacht, dass nur die Multiplizierer der L-1=4 Koeffizienten, die ungleich 0 sind vorgesehen sind. Wie in dem Beispiel, das einen auf einem FIR-Filter basierenden Abtastphasendetektor dargestellt, sind die Koeffizienten $b_{ik}$ frei wählbar. Die optimierten Gewichtskoeffizienten $b_k$ hängen von der Pulsform h(t) und dem additiven Rauschen, d.h. von dem SNR des Empfangssignals, ab. Bei kleinen SRN-Werten sind die Koeffizienten $b_k$ gleich der Ableitung h der Abtastwerte Impulsantwort h(t), eines Raised Cosine Filters mit $\alpha$=0,5 beispielsweise $b_{2,4}$=-0,21; $b_{1,2}$=1; $b_{3,2}$=-1; $b_{2,0}$=0,21. Die Figuren 18a, 18b, 18c zeigen weitere mögliche Implementierungsvarianten eines Abtastphasenfehlerdetektors 1 gemäß der Erfindung für ein Raised Cosine Impulse mit $\alpha$=0,5.

Mit dem erfindungsgemäßen Abtastphasenfehlerdetektor lässt sich ein Taktregelkreis zur Minimierung des Jitters in einer Vielzahl von Anwendungen optimieren.

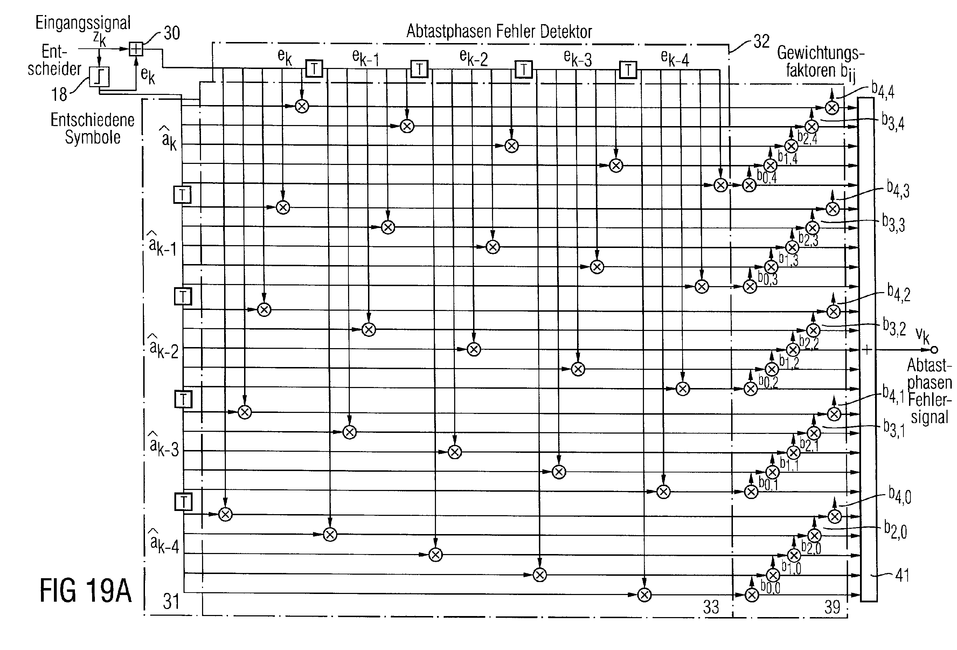

Im folgenden wird beispielhaft die Vorgehensweise zur Optimierung eines Abtastphasendetektors beschrieben. Bei dem gewählten Beispiel geht man einem Abtastphasendetektor mit einem 5x5 Multiplizier-Array aus, wie es in Figur 19a dargestellt ist. In der Gewichtungsmatrix B werden L Matrixelemente auf L verschiedenen Diagonalen = 0 gesetzt.

$$B = \begin{bmatrix} 0 & 0 & b_{0,2} & 0 & 0 \\ 0 & 0 & b_{1,2} & 0 & 0 \\ 0 & 0 & b_{2,2} = 0 & 0 & 0 \\ 0 & 0 & b_{3,2} & 0 & 0 \\ 0 & 0 & b_{4,2} & 0 & 0 \end{bmatrix}$$

Die Matrixelemente $b_{ij}$ werden auf die Gewichtungsschaltung übertragen. Die Leitungen und Multiplizierer deren Gewichtungsmatrixelemente $b_{ij}$=0 sind, werden nicht ausgeführt. Somit werden nur noch L-Produktsignale gebildet.

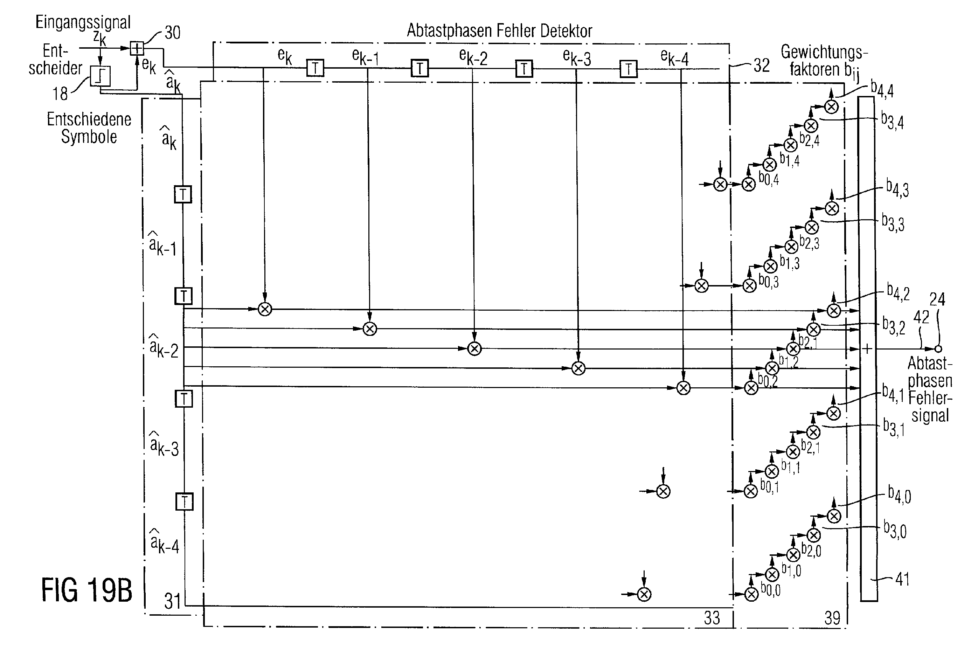

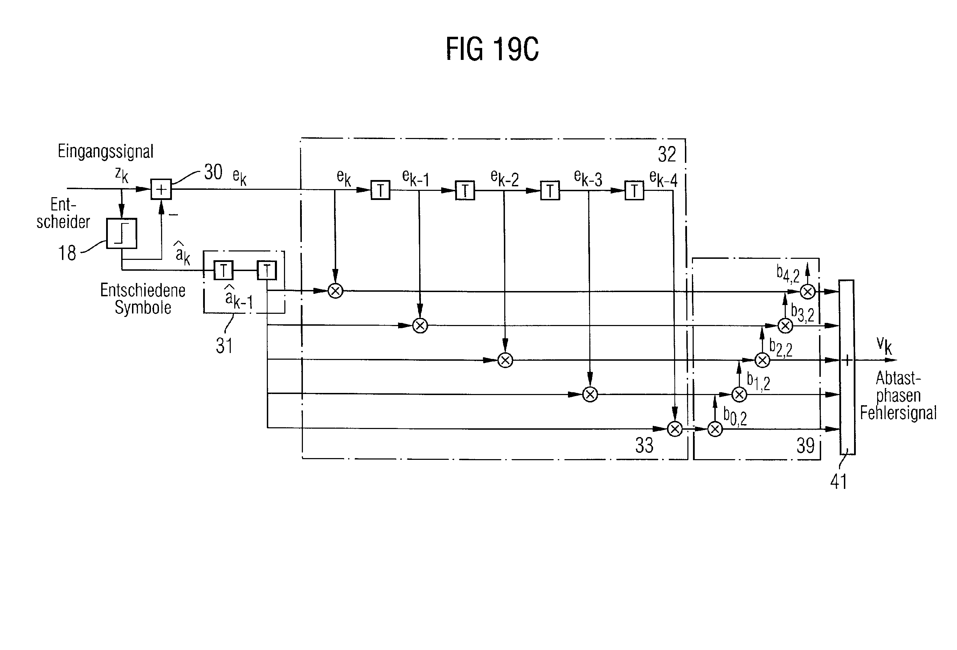

Figur 19b zeigt das bereits vereinfachte Multiplizier-Array für die oben angegebene Matrix.

Figur 19c zeigt die in Figur 19b dargestellten Abtastphasendetektor in einer vereinfachten Darstellung.

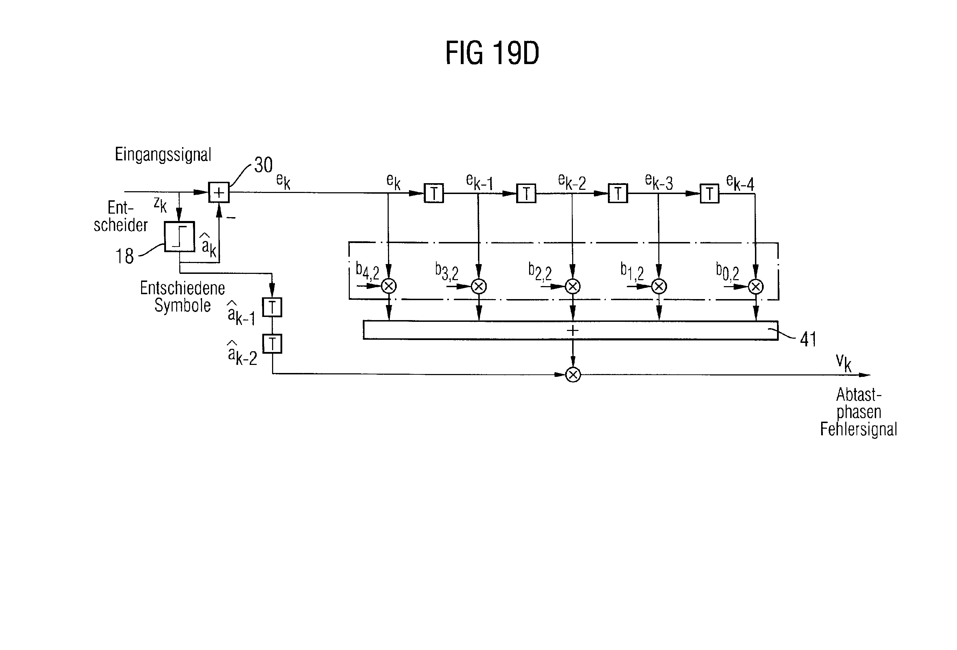

Der in Figur 19c dargestellte Abtastphasendetektor entspricht schaltungstechnisch dem in Figur 19d dargestellten vereinfachten Abtastphasendetektor.

Wie man aus den Figuren 19a - 19d sehen kann, kann der allgemeine Abtastphasenfehlerdetektor, wie er in Figur 19a dargestellt, zu einem Abtastphasenfehlerdetektor mit FIR-Filter systematisch vereinfacht werden.

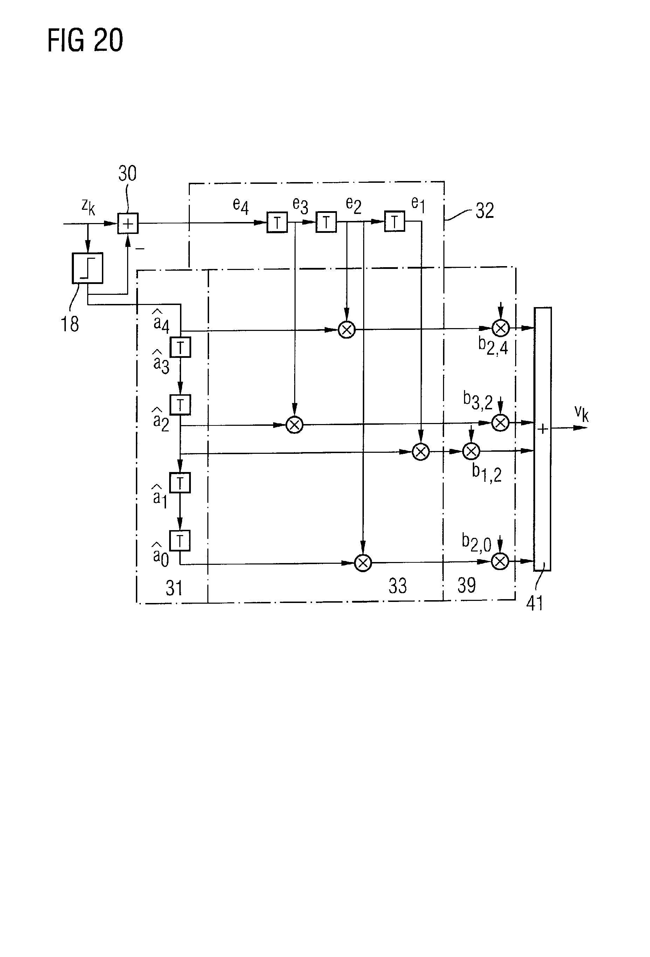

Figur 20 zeigt ein weiteres Beispiel zur Optimierung eines Abtastphasenfehlerdetektors ausgehend von einem allgemeinen Abtastphasenfehlerdetektor, wie er in Figur 19a dargestellt ist. Ausgangspunkt ist wie bei dem ersten Beispiel ist ein Abtastphasendetektor mit einem 5x5 Multiplizierer-Array, wie er in Figur 19a dargestellt ist.

Anschließend werden in der Gewichtungsmatrix L Matrixelemente auf L verschiedenen Hauptdiagonalen ungleich 0 gesetzt.

Es ergibt sich die folgende Gewichtungsmatrix B:

$$B = \begin{bmatrix} 0 & 0 & 0 & 0 & 0 \\ 0 & 0 & b_{1,2} & 0 & 0 \\ b_{0,4} & 0 & b_{2,2} = 0 & 0 & b_{2,4} \\ 0 & 0 & b_{3,2} & 0 & 0 \\ 0 & 0 & 0 & 0 & 0 \end{bmatrix}$$

Die Matrixelemente $b_{ij}$ werden auf die Gewichtungsschaltung übertragen. Diejenigen Leitungen und Multiplizierer deren Matrixgewichte $b_{ij}$=0 sind, werden nicht ausgeführt. Es ergibt sich die in Figur 20 dargestellte Ausführungsform des erfindungsgemäßen Abtastphasenfehlerdetektors.

Auf ähnlicher Weise lassen sich weitere äquivalente Schaltungsanordnungen innerhalb des Abtastphasenfehlerdetektors 1 systematisch herleiten. Theoretisch sind bei L=5 144 verschiedenen Schaltungsanordnungen herleitbar. Beispiele hierfür sind in Figuren 18a - 18c angegeben.

Bevorzugte Werte der Gewichtungsfaktoren $b_{ij}$ der Gewichtungsmatrix B werden erfindungsgemäß aus der Ableitung der Abtastwerte der Impulsantwort $a_k(\tau)$ bezüglich des Abtastphasendetektors $\tau$ berechnet. Dabei besteht folgender Zusammenhang:

$$b_{i,j} = \frac{\partial}{\partial \tau} h_{i-j}$$

Die derart berechneten Koeffizienten eignen sich insbesondere für Schaltungsanwendungen mit relativ großem additiven Rauschen.

Die erfindungsgemäße Berechnungsschaltung zur Berechnung eines Abtastphasenfehlers für eine Entscheidung rückgekoppelte Phasenregelung weist folgende Eigenschaften auf.

- Eine erste Verzögerungsgliedkette (31), die $L_{31}$-1 seriell verschaltete Verzögerungsglieder aufweist, zur Verzögerung eines digitalen Schätzwertes $\hat{a}_k$ eines Entscheiders. Die Signale in der Verzögerungsgliedkette 31 sind um jeweils j Takte verzögert. Eine Verzögerungskette mit $L_{31}$-1 Verzögerungsgliedern erstreckt sich über $L_{31}$ Takte (j=0 mitgerechnet).
- Eine zweite Verzögerungsgliedkette (32), die $L_{32}$-1 seriell verschaltete Verzögerungsglieder aufweist, zur Verzögerung des entzerrten Signals ($Z_k$, $e_k$). Die Signale in der Verzögerungsgliedkette 32 sind um jeweils i Takte verzögert.
  Eine Verzögerungskette mit $L_{32}$ Takte (=i=0 mitgerechnet).
- Die Länge $L_{31}$ der Verzögerungsgliedkette 32 sind um jeweils i Takte verzögert. Eine Verzögerungskette mit $L_{32}$-1 Verzögerungsgliedern erstreckt sich über $L_{32}$ Takte (i=0 mitgerechnet). Die Länge $L_{31}$ der Verzögerungsgliedkette 31 (Verzögerung j=0 ist mitgerechnet) ist nicht notwendigerweise gleich der Länge $L_{32}$ der Verzögerungsgliedkette 32 (Verzögerung i=0 ist mitgerechnet).
- Die Signale aus der Verzögerungsgliedkette 31 werden mit den Signalen aus der Verzögerungsgliedkette 32 so multipliziert, dass sich bei diesen Kombinationen jede Differenz x=i-j der Verzögerungszeiten genau ein Mal ergibt.
- Die Produkte werden in der Gewichtungsschaltung (39) mit den Gewichten $b_{ij}$ multipliziert. Die gewichteten Produktsignale werden addiert.
- Es können maximal $L_{31}$+$L_{32}$-1 Produkte aus Eingangssignalen mit unterschiedlichen Differenzen der Verzögerungstakte gebildet zu werden.
- In einer bevorzugten Form entspricht die Anzahl der gebildeten Produkte dem jeweils größeren Wert von entweder $L_{31}$-1 oder $L_{32}$-1.
- In einer bevorzugten Form wird das Produkt von Signalen, deren Verzögerung i-j = 0 ist, nicht gebildet.
- Im Prinzip können Produkte aus beliebigen Signalen $e_{k-j}$ und $\hat{a}_{k-j}$ gebildet werden, sofern die Differenz x der Verzögerungen den gewünschten Wert hat. Bevorzugt sind aber Kombinationen, von Signalen, bei denen die Varianz des Selbst-Rauschens gemäß Formel (7) minimal ist.

Bezugszeichenliste

| | |
|---|---|
| 1 | Berechnungsschaltung |
| 2 | Empfänger |
| 3 | Datenquelle |
| 4 | Sender |
| 5 | Leitung |
| 6 | digitales Sendefilter |
| 7 | Leitung |
| 8 | Digital/Analog Wandler |
| 9 | Übertragungskanal |
| 10 | Analog/Digital Wandler |
| 11 | Leitung |
| 12 | Empfangsfilter |
| 13 | Leitung |
| 14 | Interpolator |
| 15 | Leitung |
| 16 | Entzerrer |
| 17 | Leitung |
| 18 | Entscheider |
| 19 | Leitung |
| 20 | Leitung |
| 21 | Leitung |

| | |
|---|---|
| 22 | Eingang |
| 23 | Eingang |
| 24 | Ausgang |
| 25 | Leitung |
| 26 | Schleifenfilter |
| 27 | Leitung |
| 28 | Phasenzähler |
| 29 | Leitung |
| 30 | Subtraktionsschaltung |
| 31 | Verzögerungsgliedkette |
| 32 | Verzögerungsgliedkette |
| 33 | Multiplizierer |
| 34 | Leitungen |
| 35 | Leitungen |
| 36 | Leitungen |
| 37 | Leitungen |
| 38 | Leitungen |
| 39 | Gewichtungseinheit |
| 40 | Speicher |
| 41 | Leitungen |
| 42 | Leitungen |
| 42a | Leitung |
| 43 | Filter |
| 46 | Ausgang |
| 47 | Multiplizierer |
| 48 | Vorzeichenschaltung |
| 49 | Vorzeichenschaltung |

**Patentansprüche**

1. Berechnungsschaltung zur Berechnung eines Abtastphasenfehlersignals für eine entscheidungsrückgekoppelte Taktphasenregelungsschaltung mit:

(a) einer ersten Verzögerungsgliedkette (31), die mehrere seriell verschaltete Verzögerungsglieder aufweist, zur Verzögerung eines digitalen Schätzwertes $\hat{a}_k$ eines Entscheides;

(b) einer zweiten Verzögerungsgliedkette (32), die mehrere seriell verschaltete Verzögerungsglieder aufweist, zur Verzögerung eines entzerrten Signals ($z_k$, $e_k$);

(c) einem aus matrixförmig angeordneten Multiplizierern bestehenden Multiplizier-Array (33), das den unverzögerten digitalen Schätzwert $\hat{a}_k$ und die verzögerten Schätzwerte aller Verzögerungsglieder der ersten Verzögerungsgliedkette (31) mit dem entzerrten Signal ($z_k$, $e_k$) und den verzögerten Ausgangssignalen aller Verzögerungsglieder der zweiten Verzögerungsgliedkette (32) zur Erzeugung von Produktsignalen multipliziert;

(d) einer Gewichtungsschaltung (39), die die durch das Multiplizier-Array erzeugten Produktsignale mit einstellbaren Gewichtungsfaktoren ($b_{ij}$) multipliziert; und mit

(e) einem Addierer (41), der die durch die Gewichtungsschaltung (39) gewichteten Produktsignale zu dem Abtastphasenfehlersignal ($v_k$) addiert, das über einen Signalausgang (24) der Berechnungsschaltung (1) abgegeben wird.

2. Berechnungsschaltung nach Anspruch 1,
   **dadurch gekennzeichnet,**
   **dass** eine Subtraktionsschaltung (30) vorgesehen ist, die ein Differenzsignal ($e_k$) zwischen dem durch einen Entzerrer (16) entzerrten digitalen Empfangssignal ($z_k$) und dem durch den Entscheider (18) gebildeten Schätzwert $\hat{a}_k$ erzeugt.

19

3. Berechnungsschaltung nach Anspruch 2,
**dadurch gekennzeichnet,**
**dass** das Differenzsignal ($e_k$) an die zweite Verzögerungsgliedkette (32) angelegt wird.

4. Berechnungsschaltung nach einem der vorangehenden Ansprüche,
**dadurch gekennzeichnet,**
**dass** die Anzahl (L) der seriell verschalteten Verzögerungsglieder in beiden Verzögerungsgliedketten (31, 32) identisch ist.

5. Berechnungsschaltung nach Anspruch 4,
**dadurch gekennzeichnet,**
**dass** die Verzögerungsglieder mit der Symboltaktrate des digitalen Empfangssignals getaktet werden.

6. Berechnungsschaltung nach Anspruch 1,
**dadurch gekennzeichnet,**
**dass** der Signalausgang (24) der Berechnungsschaltung (1) mit einem Schleifenfilter (26) zum Filtern des Abtastphasenfehlersignals verbunden ist.

7. Berechnungsschaltung nach Anspruch 6,
**dadurch gekennzeichnet,**
**dass** dem Schleifenfilter (26) ein Phasenzähler (28) nachgeschaltet ist.

8. Berechnungsschaltung nach einem der vorangehenden Ansprüche,
**dadurch gekennzeichnet,**
**dass** der Entscheider (18) ein über eine Übertragungsstrecke (H) übertragenes digitalen Empfangssignals empfängt.

9. Berechnungsschaltung nach einem der vorangehenden Ansprüche,
**dadurch gekennzeichnet,**
**dass** die Anzahl (N) der seriell verschalteten Verzögerungsglieder beider Verzögerungsgliedketten (31, 32) von der Dauer der Impulsantwort h (t) abhängt.

10. Berechnungsschaltung nach Anspruch 8,
**dadurch gekennzeichnet,**
**dass** die Übertragungsstrecke (H) aufweist:

ein digitales Sendefilter (6) eines Senders (4),
einen Digital/Analog-Wandler (8) zur Umwandlung des digitalen Sendesignals in ein analoges Sendesignal,
einen Übertragungskanal (9) zur Übertragung des Sendesignals an einen Empfänger,
einen Analog/Digital-Wandler (10) zur Umwandlung des über dem Übertragungskanal empfangenen Empfangssignals in ein digitales Empfangssignal,
ein digitales Empfangsfilter (12) zum Filtern des digitalen Empfangssignals,
einen Entzerrer (12) zum Entzerren des Empfangssignals.

11. Berechnungsschaltung nach Anspruch 10,
**dadurch gekennzeichnet,**
**dass** zwischen dem Empfangsfilter (12) und dem Entzerrer (16) ein Interpolator (14) vorgesehen ist.

12. Berechnungsschaltung nach Anspruch 11,
**dadurch gekennzeichnet,**
**dass** der Analog/Digital-Wandler (8) mit einem freilaufenden Arbeitstakt arbeitet, wobei
der Interpolator (14) durch das von dem Phasenzähler abgegebene Abtasttaktsignal gesteuert wird.

13. Berechnungsschaltung nach Anspruch 4,
**dadurch gekennzeichnet,**
**dass** das Multiplizier-Array (33) $L^2$ Multiplizierer zur Erzeugung von $L^2$ Produktsignalen enthält.

14. Berechnungsschaltung nach Anspruch 13,

**dadurch gekennzeichnet,**
**dass** die Gewichtungsschaltung (39) $L^2$ Multiplizierer zur Multiplikation der Produktsignale mit den einstellbaren Gewichtungsfaktoren aufweist.

15. Berechnungsschaltung nach Anspruch 1,
**dadurch gekennzeichnet,**
**dass** eine programmierbare Speichereinheit (40) zum Speichern der Gewichtungsfaktoren vorgesehen.

16. Berechnungsschaltung nach Anspruch 1,
**dadurch gekennzeichnet,**
**dass** das Abtastphasenfehlersignal durch den Abtastphasendetektor gemäß folgender Gleichung berechnet wird

$$v(\tau) = \left\{ \begin{bmatrix} e_0(\tau) & e_1(\tau) & \cdots & \cdots & e_{L-1}(\tau) \end{bmatrix} \cdot \begin{bmatrix} b_{0,0} & b_{0,1} & b_{0,2} & \cdots & b_{0,L-1} \\ b_{1,0} & b_{1,1} & b_{1,2} & & \\ b_{2,0} & b_{2,1} & b_{2,2} & & \\ & & & \ddots & \\ b_{L-1,0} & & & & b_{L-1,L-1} \end{bmatrix} \cdot \begin{bmatrix} \hat{a}_0 \\ \hat{a}_1 \\ \vdots \\ \vdots \\ \hat{a}_{L-1} \end{bmatrix} \right\}$$

wobei:

$e_i(\tau)$ die entzerrten Differenzwerte,
B die Gewichtungskoeffizientenmatrix der Gewichtungsschaltung und
$\hat{a}_i$ die Symbolschätzwerte des Entscheiders sind.

17. Berechnungsschaltung zur Berechnung eines Abtastphasenfehlersignals für eine entscheidungsrückgekoppelte Taktphasenregelungsschaltung mit:

(a) einer Subtraktionsschaltung (30), die ein Differenzsignal zwischen einem durch einen Entzerrer entzerrten digitalen Empfangssignal ($z_k$) und einem durch einen Entscheider gebildeten digitalen Schätzwert $\hat{a}_{(k)}$ erzeugt;

(b) einem nicht rekursiven digitalen Filter (43) zum Filtern des Differenzsignals ($e_k$),
wobei das nicht rekursive digitale Filter (43) eine Verzögerungsgliedkette (32) mit einer Anzahl von seriell verschalteten Verzögerungsgliedern (32-i) aufweist, deren verzögerte Ausgangssignale jeweils mit einem einstellbaren Gewichtungskoeffizienten multipliziert und durch einen Addierer (41) zu einem digitalen Filterausgangssignal addiert werden,
wobei der Gewichtungskoeffizient für das Ausgangssignal des in der Mitte der Verzögerungsgliedkette (32) gelegenen Verzögerungsgliedes Null ist;

(c) einer Verzögerungsschaltung (31) zur Verzögerung des digitalen Schätzwertsignals $\hat{a}_{(k)}$ mit einer Verzögerungszeit (M * T) zwischen einem Eingang des nicht rekursiven digitalen Filters (43) und dem mittig gelegenen Verzögerungsglied innerhalb der Verzögerungsgliedkette (32) und mit

(d) einem Multiplizierer (47), der das digitale Filterausgangssignal des nicht rekursiven digitalen Filters (43) mit dem Ausgangssignal der Verzögerungsschaltung (31) zu dem Abtastphasenfehlersignal $v_k$ multipliziert.

18. Berechnungsschaltung nach Anspruch 17,
**dadurch gekennzeichnet,**
**dass** die Gewichtungskoeffizienten für die übrigen Verzögerungsglieder der Verzögerungsgliedkette (32) zu dem Gewichtungskoeffizienten für das mittig gelegene Verzögerungsglied punktsymmetrische Werte aufweisen.

**19.** Berechnungsschaltung nach Anspruch 17 oder 18,
**dadurch gekennzeichnet,**
**dass** der Subtraktionsschaltung (30) eine Vorzeichenschaltung nachgeschaltet ist, die das Vorzeichen des Differenzsignals erkennt und an das nicht rekursive digitale Filter (43) abgibt.

**20.** Berechnungsschaltung nach einem der vorangehenden Ansprüche 17-19,
**dadurch gekennzeichnet,**
**dass** der Verzögerungsschaltung (32) eine zweite Vorzeichenschaltung vorgeschaltet ist, die das Vorzeichen des digitalen Schätzwertsignals erkennt und an die Verzögerungsschaltung abgibt.

**21.** Berechnungsschaltung nach einem der vorangehenden Ansprüche,
**dadurch gekennzeichnet,**
**dass** der Entzerrer (16) ein adaptiver Entzerrer ist.

**22.** Berechnungsschaltung nach Anspruch 21,
**dadurch gekennzeichnet,**
**dass** die Filterkoeffizienten ($C_i$) des adaptiven Entzerrers (16) mit gespeicherten Entkopplungskoeffizienten ($g_i$) multipliziert und mittels eines Addierers mit einem Phasenreferenzsignalwert zu einem Entkopplungssignal addiert werden.

**23.** Taktphasenregelungsschaltung zur Taktphasenregelung mit:

(a) einem Analog/Digital-Wandler (10), der ein analoges Empfangssignal mit einem Abtasttaktsignal zur Erzeugung eines digitalen Empfangssignals abtastet;

(b) einem Entzerrer (16) zum Entzerren des digitalen Empfangssignals;

(c) einem dem Entzerrer (16) nachgeschalteten Entscheider (18), der aus dem entzerrten digitalen Empfangssignal ein digitales Schätzwertsignal $\hat{a}_k$ für das Empfangssignal erzeugt;

(d) einem Abtastphasenfehlerdetektor (1) zur Erzeugung eines Abtastphasenfehlersignals $v_k$ zur Taktphasenregelung, das die Phasenabweichung zwischen der Signalphase des Abtasttaktsignals und einer Soll-Signalphase eines idealen Abtasttaktsignals angibt; und mit

(e) einem Schleifenfilter (26), das das Abtastphasenfehlersignal $v_k$ filtert und als Abtastsignal an den Analog/Digital-Wandler (10) abgibt;

(f) wobei der Abtastphasenfehlerdetektor (1) aufweist:

eine Subtraktionsschaltung (30), die ein Differenzsignal $e_k$ zwischen dem entzerrten digitalen Empfangssignal $z_k$ und dem digitalen Schätzwertsignal $\hat{a}_k$ erzeugt,
eine erste Verzögerungsgliedkette (31), die mehrere seriell verschaltete Verzögerungsglieder aufweist, zur Verzögerung des digitalen Schätzwertes $\hat{a}_k$ des Entscheiders,
eine zweite Verzögerungsgliedkette (32), die mehrere seriell verschaltete Verzögerungsglieder aufweist, zur Verzögerung des entzerrten Differenzsignals $e_k$,
einen aus matrixförmig angeordneten Multiplizierer bestehenden Multiplizier-Array (33), das den unverzögerten digitalen Schätzwert $\hat{a}_k$ und die verzögerten Schätzwerte aller Verzögerungsglieder der ersten Verzögerungsgliedkette mit dem entzerrten Differenzsignal $e_k$ und den verzögerten Differenzsignalen aller Verzögerungsglieder der zweiten Verzögerungsgliedkette zur Erzeugung von Produktsignalen multipliziert,
eine Gewichtungsschaltung (39), die die durch das Multiplizier-Array erzeugten Produktsignale mit einstellbaren Gewichtungsfaktoren multipliziert, und einen Addierer (41), der die durch die Gewichtungsschaltung gewichteten Produktsignale zur Erzeugung des Abtastphasenfehlersignals $v_k$ addiert, das über einen Signalausgang (24) des Abtastphasenfehlerdetektors (1) an das Schleifenfilter (26) abgeben wird.

**24.** Transceiver mit einer Taktphasenregelungsschaltung nach Anspruch 23.

**25.** Transceiver nach Anspruch 24,

**dadurch gekennzeichnet,**
**dass** eine Echosignalkompensationsschaltung zur Kompensation eines Echosignals, welches durch einen von dem Transceiver gesendetes Sendesignal hervorgerufen wird, vorgesehen ist.

26. Transceiver nach Anspruch 25,
**dadurch gekennzeichnet,**
**dass** eine Amplitudenbegrenzungsschaltung vorgesehen ist, die die Amplitude des gefilterten Steuersignals auf einen Begrenzungswert begrenzt, wobei der Begrenzungswert von einem Einstellsignal für die Echosignalkompensationsschaltung abhängt.

27. Transceiver nach Anspruch 25,
**dadurch gekennzeichnet,**
**dass** ein digitales Ausgangssignal der Echokompensationsschaltung von gefilterten digitalen Empfangssignalen mittels eines Subtrahierers zur Erzeugung eines echokompensierten digitalen Empfangssignals subtrahiert wird.

28. Datenempfangseinrichtung mit einer Berechnungsschaltung nach Anspruch 1.

29. Datenempfangseinrichtung mit einer Berechnungsschaltung nach Anspruch 28,
**dadurch gekennzeichnet,**
**dass** die Datenempfangseinrichtung ein Empfänger zum Empfang eines analogen Empfangssignals ist.

30. Datenempfangseinrichtung mit einer Berechnungsschaltung nach Anspruch 29,
**dadurch gekennzeichnet,**
**dass** die Datenempfangseinrichtung eine Leseeinrichtung zum Auslesen eines analogen Signals ist.

31. Berechnungsschaltung nach einem der Ansprüche 1 bis 4,
**dadurch gekennzeichnet,**
**dass** der Subtraktionsschaltung (30) eine Vorzeichenschaltung nachgeschaltet ist, die das Vorzeichen des Differenzsignals erkennt und an die Verzögerungsgliedkette (32) abgibt.

32. Berechnungsschaltung nach einem der vorangehenden Ansprüche 1 bis 4,
**dadurch gekennzeichnet,**
**dass** der Verzögerungsschaltung (23; 32) eine zweite Vorzeichenschaltung vorgeschaltet ist, die das Vorzeichen des digitalen Schätzwertsignals erkennt und an die erste Verzögerungsgliedkette (31) abgibt.

# FIG 1

Stand der Technik

EP 1 353 469 A2

```
              Sende-
              daten
Daten-                    Transceiver                              Transceiver
verarbeitung  Empfangs-      auf          Leitung                     auf         Empfangs-   Daten-
              daten     Vermittlungsseite                         Teilnehmerseite    daten    verarbeitung
                                                                                  Sende-
              Takt           COT                                     RT           daten

                                                                                  zurück-
                                                                                  gewonnener
                                                                                  Takt
```

## FIG 2
### Stand der Technik

Sende-daten-symbole

Sende-filter SF

D / A

Treiber-schaltung

Echo Kompensations-schaltung FC

Hybrid-schaltung

Über-tragungs-leitung

freilaufender Abtasttakt

Empfangs-daten-symbole

Ent-scheider

Entzerrer EQ

AGC Amplituden regelung

SUB A

Abtastschaltung

Inter-polator

IF

A / D

EF

$a(k)$

$y(k)$

$c_i$

Abtasttaktsignal

Steuerschaltung

Taktregel-Steuersignal

Schleifen-filter

Phasen-zähler

Phasenreferenz-signalwert

Transceiver

EP 1 353 469 A2

# FIG 3
Stand der Technik

EP 1 353 469 A2

# FIG 4

## Stand der Technik

# FIG 5A

Stand der Technik

z(k)

u(k)

e(k) = z(k)-a(k)

Jitterreduktion

T

T

−

+

u(k)

Berechnungsschaltung
für Taktregelkriterium

EP 1 353 469 A2

## FIG 5B
Stand der Technik

## FIG 6A

N=3

Verzerrungsfreier
Empfangsimpuls
mit Roll-Off Faktor = 0.2
ohne Excessbandbreite

## FIG 6B

Mittelwert
des Taktregelkriteriums
nach /1/

## FIG 6C

Mittelwert
des Taktregelkriteriums mit
Trk(i) = -1, -1, -1,
0, 1, 1, 1 (N=3)

## FIG 7A

Verzerrter
Empfangsimpuls mit
Roll-Off Faktor = 0.2
und einer Excessbandbreite
von 50%

## FIG 7B

Mittelwert
des Taktregelkriteriums
nach /1/

## FIG 7C

Mittelwert
des Taktregelkriteriums mit
Trk(i)=0, -1, -0.7,
0, 0.7, 1, 0 (N=3)

## FIG 8A

Entzerrter
Empfangsimpuls mit
Roll-Off Faktor = 0.2
und einer
Excessbandbreite
von 50%

## FIG 8B

Mittelwert
des Taktregelkriteriums
nach /1/

## FIG 8C

Mittelwert
des Taktregelkriteriums mit
Trk(i)=0, -1, -0.75,
0, 0.75, 1, 0 (N=3)

## FIG 9

Übertragungsstrecke H

Datenquelle
a(k)
SF
T_RX
D/A
Übertragungskanal
Rauschen
T_RX
A/D
EF
Interpolator
Entzerrer EQ
z(k)
Entscheider
$\hat{a}_k$

3   5   6   7   8   9   10   11   12   13   14   15   16   17   18   19

Sender   4

τ
29
Phasenzähler
z(k)
20
$\hat{a}(k)$
21
22   23
Schleifenfilter
25
v(k)
Abtastphasenfehlerdetektor
27   26   24   1

Empfänger   2

EP 1 353 469 A2

FIG 10

# FIG 11

FIG 12

EP 1 353 469 A2

## FIG 13A

$$f(t) = E[v(h)]$$

-0.15  -0.1  -0.05    0    0.05    0.1    0.15

normalisierter Abtastphasenfehler  t / T

## FIG 13B

Varianz
$$\sigma_v^2$$

Varianz des
additiven
Rauschens

Varianz des
Selbst-
Rauschens

-0.15  -0.1  -0.05    0    0.05    0.1    0.15

normalisierter Abtastphasenfehler  t / T

# FIG 14A

Gewichtungsfaktoren $b_{ij}$

# FIG 14B

EP 1 353 469 A2

FIG 15A

EP 1 353 469 A2

# FIG 15B

EP 1 353 469 A2

## FIG 16A

Eingangs-signal $z_k$

30

Fehler

$e_k$

Ent-scheider

+

−

18

Abtastphasen Fehlerdetektor

1

$v_k$

Abtastphasen Fehlersignal

$\widehat{a}_k$

Entschiedene Symbole

## FIG 16B

Eingangs-signal $z_k$

Ent-scheider

18

Abtastphasen Fehlerdetektor

1

$v_k$

Abtastphasen Fehlersignal

$\widehat{a}_k$

Entschiedene Symbole

## FIG 16C

$z_k$

30

Fehler

$e_k$

Eingangs-signal

+

−

sgn( )

Abtastphasen Fehlerdetektor

1

$v_k$

Abtastphasen Fehlersignal

18

$\widehat{a}_k$

sgn( )

Entschiedene Symbole

FIG 17

FIG 18A

FIG 18B

FIG 18C

FIG 19A

EP 1 353 469 A2

FIG 19B

# FIG 19C

EP 1 353 469 A2

# FIG 19D

EP 1 353 469 A2

# FIG 20